# EUROPEAN PATENT APPLICATION

(11) **EP 1 547 767 A1**
(43) Date of publication of application: **29.06.2005**
(21) Application number: 03797727.9
(22) Date of filing: 22.09.2003
(51) Int. Cl.: B32B 27/36, B29C 55/28

(54) **SHAPE-MEMORY LAMINATED POLYBUTYLENE TEREPHTHALATE FILM, PRODUCTION PROCESS AND USE THEREOF, AND PROCESS FOR PRODUCTION OF POLYBUTYLENE TEREPHTHALATE FILM**

(30) Priority: 20.09.2002 JP 2002275939; 07.01.2003 JP 2003001533; 07.01.2003 JP 2003001534
(71) Applicant: Kagawa, Seiji, Koshigaya-shi, Saitama 343-0807 (JP)
(72) Inventor: KAWAGA, Seiji, Koshigaya-shi, Saitama 343-0807 (JP)
(74) Representative: Strehl Schübel-Hopf & Partner
(86) International application number: PCT/JP2003/012102
(87) International publication number: WO 2004/026577

(57) **Abstract**

A polybutylene terephthalate laminate film having excellent shape memory and high-temperature dimensional stability obtained by (1) subjecting a laminate film comprising a polybutylene terephthalate film and another film or film laminate to a shaping treatment at a temperature T₁ equal to or lower than the glass transition temperature of said polybutylene terephthalate while maintaining a first shape; (2) deforming the shaped laminate film to a second shape at a temperature T₂ higher than said glass transition temperature; and (3) cooling said laminate film to a temperature T₃ equal to or lower than said glass transition temperature.

## Description

### FIELD OF THE INVENTION

The present invention relates to a shape-memory polybutylene terephthalate laminate film useful for package sheets and its production method and use, and a method for producing a polybutylene terephthalate film excellent in the uniformity of a film thickness and a thermal shrinkage resistance, and a functional polybutylene terephthalate film having excellent ease-to-tear and twist retention characteristics useful for package sheets, etc.

### BACKGROUND OF THE INVENTION

Conventionally known lid sheets for sealing the openings of instant food containers are laminates comprising an easily peelable sealant film, an aluminum foil and paper in this order, for instance, in the case of containers for instant noodles.

The lid sheet having an aluminum foil layer is excellent in barrier to steam, etc., dimensional stability to heat, etc., filling adaptability (no curling occurs in the lid sheet when filling the container with a content and sealing it), light screening, etc. The lid sheet having an aluminum foil layer has properties of keeping a lift-up state when it is peeled from the container substantially to its center position and lifted up (dead-folding characteristics). Because of the dead-folding characteristics, hot water can easily be poured into a container for instant Chinese noodle, etc., for instance, with the peeled lid kept in a half-open state. Thereafter, the lid is closed until the instant noodle becomes eatable, and then reopened to eat.

However, the aluminum-foil-containing lid sheets are disadvantages in that when incinerated after use, aluminum foils are fused like ingots in an incinerator, damaging the incinerator and lowering its burning efficiency. From the aspect of environmental protection, it is desirable to use as few aluminum-foil-containing lid sheets as possible. In the case of instant foods like cupped Chinese noodles, it is necessary from the aspect of food safety to inspect whether or not foreign metallic materials are present in containers. However, the inspection with a metal detector cannot be conducted after the heat-sealing of aluminum-foil-containing lids. Accordingly, the inspection is presently conducted before heat-sealing the lids. Also, the aluminum-foil-containing lids are disadvantageously heavy.

As a lid sheet containing no aluminum foil, for instance, a laminate film having a paper layer, an adhesion resin layer, a polyethylene terephthalate film layer and an easy-to-peel resin layer in this order is proposed. The polyethylene terephthalate (PET) film has such properties as steam barrier, dimensional stability to heat, filling adaptability (no curling), etc. However, because the PET film has large toughness, it fails to be kept in an open state, (poor in dead-folding characteristics). Accordingly, the lid is easily closed after opening, making it difficult to pour hot water into the container.

It is required that a laminate film constituting a lid sheet used for containers of instant noodle, etc. is not curled when sealed to the container, and that it keeps a curled state when peeled from the container (having dead-folding characteristics). Because the lid sheet is usually heat-sealed to the container, it would be extremely useful, if it had a shape memory that it is not curled before heat sealing and returns to a curled shape by heat sealing.

However, no package sheets formed by shape-memory laminate films have been known so far. Shape-memory resins are generally subjected to large modulus change before and after their glass transition temperatures. A shape memory mechanism comprises, for instance, (1) forming a shape memory article having an arbitrary shape M, heating it in a state of the shape M for crystallization (entanglement of crystal portions) or intermolecular cross-linking to generate fixing points for shape memory; (2) applying an external force thereto at a temperature equal to or higher than a glass transition temperature and lower than the above heating temperature to cause deformation to a shape N, and making its temperature lower than the glass transition temperature without changing the shape, thereby fixing it to the shape N; and (3) heating it to the glass transition temperature or higher, thereby recovering the shape M without applying an external force. Though the PET has shape-memory characteristics, it has too high a shape recovery temperature because of the glass transition temperature of about 70 to 80°C.

Because polybutylene terephthalate (PBT) has a glass transition temperature of about 20 to 45°C, its shape-memory characteristics at practical temperatures would be utilized if possible to use as package sheets. For instance, JP 2-123129 A discloses a shape-memory resin composed of a block copolymer of PBT and aliphatic polylactone. JP 2-269735 A discloses shape-memory copolyester moldings composed of polyethylene terephthalate copolymerized with a third component to have a crystal-melting entropy of 3 cal/g or less. JP 2-240135 A discloses a shape-memory resin composed of a block copolymer of PBT and polyethylene glycol. However, any of these references fails to teach films of shape-memory PBT resins.

JP 7-33048 B proposes a method for forming a PBT resin having an intrinsic viscosity of 1.0 or more into a film by an inflation method under the condition that the resin extrusion temperature meets the formula of melting point (°C) < resin extrusion temperature (°C) < melting point - 26 + 53 x intrinsic viscosity (°C). However, in this method, a combination of a blow-up ratio, a resin extrusion temperature and a resin-extruding pressure are not optimized, and the resultant PBT film has a relatively large thermal shrinkage ratio.

With respect to functions as package sheets, because the PBT film has excellent gas barrier and odor retention, it is preferable to provide the PBT film with functions such as easy tearing, twist retention, etc. An ease-to-tear polyester film, JP 2002-80705 A discloses a biaxially stretched polyester film comprising 80 to 95% by mass of polyethylene terephthalate (PET) and 20 to 5% by mass of modified PBT (modified PBT). However, this biaxially stretched polyester film has insufficient ease to tear.

JP 5-104618 A discloses a method for producing a polyester film having good twist retention comprising the steps of laminating a resin (B) having a higher melting point than the melting point of a polyester resin layer (A) by 10°C or higher to at least one surface of the polyester resin layer (A), such that the thickness of the resin (B) is 5 to 60% of the total film thickness; and heat-treating the resultant laminate at a temperature equal to or higher than (the melting point of (A) - 10°C) and lower than the melting point of (B), after monoaxial elongation. However, this production method of a polyester film having twist retention has complicated steps and thus high cost.

### OBJECT OF THE INVENTION

Accordingly, an object of the present invention is to provide a polybutylene terephthalate laminate film having excellent shape memory and high-temperature dimensional stability, and its production method and use.

Another object of the present invention is to provide a method for producing a polybutylene terephthalate film, which is thin and excellent in the uniformity of a film thickness and thermal shrinkage resistance.

A further object of the present invention is to provide a polybutylene terephthalate film with excellent ease to tear.

A still further object of the present invention is to provide a polybutylene terephthalate film having excellent twist retention, which can be produced at a low cost.

### SUMMARY OF THE INVENTION

As a result of intensive research in view of the above objects, the inventor has found as follows:
(A) A PBT laminate film having excellent shape memory and high-temperature dimensional stability can be obtained by (1) subjecting a laminate film of the above PBT film and another film or film laminate to a shaping treatment to a first shape at a temperature T₁ equal to or lower than the glass transition temperature Tg of the PBT film, while maintaining the first shape; (2) deforming the resultant shaped laminate to a second shape at a temperature T₂ higher than the Tg; and (3) cooling it to a temperature T₃ equal to or lower than the Tg.
(B) A PBT laminate film having excellent shape memory and high-temperature dimensional stability can be obtained by (1) (i) subjecting a laminate film of the above PBT film and another film or film laminate produced in advance to a shaping treatment at a temperature T₄ higher than the Tg and lower than the melting point of the polybutylene terephthalate while maintaining it in a first shape, or (ii) subjecting the above PBT film to a shaping treatment at the temperature T₄ while maintaining it in the first shape, and then laminating the above PBT film with another film or film laminate to produce a laminate film having the first shape; and (2) cooling the shaped laminate film to a temperature T₅ equal to or lower than the Tg to fix it to the first shape; (3) deforming the shaped laminate film to a second shape at a temperature T₆ higher than the Tg and lower than the temperature T₄; and then (4) cooling the deformed laminate film to a temperature T₇ equal to or lower than the Tg to fix it to the second shape.
(C) A thin polybutylene terephthalate film having excellent uniformity of film thickness and thermal shrinkage resistance can be produced by an air-cooled inflation of a polybutylene terephthalate (PBT) resin comprising ejecting a humid air through a first cooling ring disposed near an annular die to cool a neck portion of a bubble at a blow-up ratio of 1.5 to 2.8, at a resin extrusion temperature of 210 to 250°C, and at a resin-extruding pressure of 9.8 to 13.7 MPa (100 to 140 kgf/cm²).
(D) A polybutylene terephthalate film can be provided with easy-to-straight-tear characteristics by forming a lot of substantially parallel linear scratches on at least one entire surface, so that it can be torn substantially straight along the linear scratches from any point.
(E) A polybutylene terephthalate film can be provided with easy tearing and twist retention by uniformly forming a lot of fine penetrating pores and/or a lot of fine non-penetrating pores.

The present invention has been completed based on these findings.

Thus, the shape-memory polybutylene terephthalate laminate film of the present invention comprises (1) a polybutylene terephthalate film, and (2) at least one selected from the group consisting of a paper sheet, another resin film and a metal foil, or a laminate comprising it, having a first shape memorized in a predetermined temperature range.

The shape-memory polybutylene terephthalate laminate film of the present invention substantially recovers the first shape when exposed to a temperature equal to or higher than the temperature at which the first shape is memorized, after deformed to the second shape in a different temperature range from the predetermined temperature range.

In a preferred example of the shape-memory polybutylene terephthalate laminate film, the temperature at which the first shape is recovered is equal to or lower than the Tg of the polybutylene terephthalate. The temperature at which the first shape is recovered is more preferably 35°C or lower.

The temperature at which the shape-memory polybutylene terephthalate laminate film recovers the first shape is higher than the Tg and lower than the melting point of the polybutylene terephthalate. The temperature at which the first shape is recovered is more preferably 75 to 100°C.

The first shape is preferably a curled shape, and the second shape is preferably a substantially flat shape or an oppositely curled shape.

A lot of substantially parallel linear scratches are preferably formed on at least one of on its entire surface the polybutylene terephthalate film, so that the shape-memory polybutylene terephthalate laminate film can be torn substantially straight along the linear scratches. The depth of the linear scratches is preferably 1 to 40% of the thickness of the polybutylene terephthalate film layer. Specifically, it is preferable that the depth of the linear scratches is 0.1 to 10 µm, that the width of the linear scratches is 0.1 to 10 µm, and that the intervals of the linear scratches are 10 to 200 µm. At least one surface of the polybutylene terephthalate film may be vapor-deposited with ceramics or metals.

A preferred example of the layer structure of the shape-memory polybutylene terephthalate laminate film of the present invention comprises the polybutylene terephthalate film, the paper sheet, and a sealant film in this order. Another example of the layer structure of the shape-memory polybutylene terephthalate laminate film of the present invention comprises the polybutylene terephthalate film, the paper sheet, a rigid film, and a sealant film in this order. A further example of the layer structure of the shape-memory polybutylene terephthalate laminate film of the present invention comprises the polybutylene terephthalate film, a rigid film, and a sealant film in this order. A light-screening ink layer may be formed on the polybutylene terephthalate film on the side of the paper sheet, or on the rigid film on the side of the sealant film.

The shape-memory polybutylene terephthalate laminate film of the present invention is useful as package sheets, particularly useful as package sheets for container lids.

The first method of the present invention for producing a shape-memory polybutylene terephthalate laminate film comprising (a) a polybutylene terephthalate film, and (b) at least one selected from the group consisting of a paper sheet, another resin film and a metal foil, or a laminate comprising it, comprises the steps of (1) subjecting a laminate film comprising the polybutylene terephthalate film and another film or film laminate to a shaping treatment at a temperature T₁ equal to or lower than the glass transition temperature of the polybutylene terephthalate while maintaining a first shape; (2) deforming the shaped laminate film to a second shape at a temperature T₂ higher than the glass transition temperature; and (3) cooling the laminate film to a temperature T₃ equal to or lower than the glass transition temperature so that the laminate film is fixed to the second shape.

The first shape is preferably a curled shape, and the second shape is preferably a substantially flat shape or an oppositely curled shape. The laminate film comprising the polybutylene terephthalate film adhered to another film or film laminate is preferably conveyed by a roll, and treated at the temperature T₁ along a peripheral surface of the roll to provide a curled laminate film. Deformation at the temperature T₂ is preferably conducted for 30 to 60 seconds. It is preferable that the temperature T₁ is 35°C or lower, that the temperature T₂ is higher than 45°C and 65°C or lower, and that the temperature T₃ is 15 to 25°C. The temperature T₁ is more preferably 15 to 25°C. The curled laminate film is cooled to the temperature T₃, and then wound in an uncurling direction. A tension of 4 kgf/m (width) or more is applied to the polybutylene terephthalate film, so that the polybutylene terephthalate film is adhered to another film or film laminate. The tension is more preferably 10 to 20 kgf/m (width).

The second method of the present invention for producing a shape-memory polybutylene terephthalate laminate film comprising (a) polybutylene terephthalate film, and (b) at least one selected from the group consisting of a paper sheet, another resin film and a metal foil, or a laminate comprising it, comprises the steps of (1) (i) producing a laminate film of the polybutylene terephthalate film and another film or film laminate in advance, and subjecting it to a shaping treatment at the temperature T₄ while maintaining it in the first shape to produce the shaped laminate film having the first shape, or (ii) producing a laminate film having the first shape by subjecting the polybutylene terephthalate film to a shape treatment at a temperature T₄ higher than the glass transition temperature and lower than the melting point of the polybutylene terephthalate while maintaining it in the first shape and then laminating it with another film or film laminate; (2) cooling the shaped laminate film to a temperature T₅ equal to or lower than the glass transition temperature to fix it to the first shape; (3) deforming the shaped laminate film to a second shape at a temperature T₆ higher than the glass transition temperature and lower than the temperature T₄; and then (4) cooling the deformed laminate film to a temperature T₇ equal to or lower than the glass transition temperature to fix it to the second shape.

The first shape is preferably a curled shape, and the second shape is preferably a substantially flat shape or an oppositely curled shape. It is preferable that the temperature T₄ is 75 to 100°C, that the temperature T₅ is 40°C or lower, that the temperature T₆ is 45 to 65°C, and that the temperature T₇ is 40°C or lower.

When the shaped polybutylene terephthalate film is adhered to another film or film laminate to produce the shaped laminate film, the polybutylene terephthalate film is preferably conveyed while keeping it in contact with a peripheral surface of one of a pair of heat rolls, and heated at the temperature T₄ along the peripheral surface of the heat roll to impart a curled shape to the polybutylene terephthalate film, and the resultant curled polybutylene terephthalate film and another film or film laminate are caused to pass through a pair of the heat rolls for continuous adhesion.

When the polybutylene terephthalate laminate film comprising the polybutylene terephthalate film adhered to another film or film laminate is subjected to a shaping treatment, the polybutylene terephthalate laminate film is preferably conveyed by a heat roll, and treated at the temperature T₄ along the peripheral surface of the heat roll to impart a curled shape.

A tension of 4 kgf/m (width) or more is preferably applied to the polybutylene terephthalate film, so that the polybutylene terephthalate film is adhered to another film or film laminate. The tension is preferably 10 to 20 kgf/m (width). The curled laminate film is preferably cooled to the temperature T₅, and then treated at the temperature T₆ or lower and the temperature T₇ in an uncurling direction winding.

The method of the present invention for producing a container having a lid heat-sealed to a container body, the lid being composed of a shape-memory polybutylene terephthalate laminate film, comprises the steps of annealing the shape-memory polybutylene terephthalate laminate film at a temperature T₈ higher than the glass transition temperature of the polybutylene terephthalate while keeping it flat; and punching and heat-sealing the resultant substantially flat shape-memory polybutylene terephthalate laminate film to the container body by a lid-sealing means, thereby adhering the lid composed of the shape-memory polybutylene terephthalate laminate film to the container.

The annealing is preferably conducted for 30 to 60 seconds. The temperature T₈ is preferably 80 to 120°C.

The method of the present invention for producing a polybutylene terephthalate film from a polybutylene terephthalate resin by an air-cooled inflation method, comprises the steps of ejecting a humid air through a first cooling ring disposed near an annular die to cool a neck portion of a bubble at a blow-up ratio of 1.5 to 2.8, a resin extrusion temperature of 210 to 250°C, and a resin-extruding pressure of 9.8 to 13.7 MPa.

The bubble is preferably further cooled by a cooling air ejecting from the second cooling ring disposed slightly above a frost line of the bubble; and wherein the temperature around a cylindrical net disposed between the first cooling ring and the second cooling ring is kept constant, thereby stabilizing the temperature of the bubble cooled by the first cooling ring and the second cooling ring.

A humid air ejected from a cooling-air-ejecting means disposed in a lower portion of the net is preferably blown up along an outer surface of the cylindrical net, to cool the surrounding of the net. The bubble is preferably further cooled by a third cooling ring disposed slightly above the second cooling ring. Further, the cooling air ejected from the second cooling ring and the third cooling ring is preferably a humid air. The temperature of the humid air is preferably 15 to 25°C.

The easy-to-straight-tear polybutylene terephthalate film of the present invention comprises a polybutylene terephthalate film having a lot of substantially parallel linear scratches at least one entire surface, so that it can be torn substantially straight along the linear scratches from any point.

The depth of the linear scratches is preferably 1 to 40% of the film thickness. The depth of the linear scratches is preferably 0.1 to 10 µm, the width of the linear scratches is preferably 0.1 to 10 µm, and the intervals of the linear scratches are preferably 10 to 200 µm.

The easy-to-straight-tear polybutylene terephthalate film may be either one of a single-layer film or a laminate film. In the case of the laminate film, the laminate film preferably comprises at least one layer composed of a film having the linear scratches, and a sealant film layer. A ceramic or a metal is preferably vapor-deposited on the easy-to-straight-tear polybutylene terephthalate film of the present invention to improve gas barrier. Package sheets and wrapping bags constituted by the easy-to-straight-tear polybutylene terephthalate film of the present invention are suitable for applications needing easy tearing.

The porous polybutylene terephthalate film of the present invention comprises a polybutylene terephthalate film having a lot of fine penetrating pores and/or non-penetrating pores formed uniformly, thereby having good twist retention.

The fine pores preferably have an average opening diameter of 0.5 to 100 µm, and their density is preferably about 500/cm² or more. Package sheets constituted by the porous polybutylene terephthalate film of the present invention are suitable for applications needing twist retention.

### BRIEF DESCRIPTION OF THE DRAWINGS

Fig. 1 is a cross-sectional view showing one example of the layer structure of a shape-memory polybutylene terephthalate (PBT) laminate film;
Fig. 2 is a cross-sectional view showing another example of the layer structure of a shape-memory PBT laminate film;
Fig. 3 is a cross-sectional view showing a further example of the layer structure of a shape-memory PBT laminate film;
Fig. 4 is a cross-sectional view showing a still further example of the layer structure of a shape-memory PBT laminate film;
Fig. 5 is a cross-sectional view showing a still further example of the layer structure of a shape-memory PBT laminate film;
Fig. 6 is a cross-sectional view showing a still further example of the layer structure of a shape-memory PBT laminate film;
Fig. 7 is a schematic view showing one example of an apparatus for producing a shape-memory PBT laminate film;
Fig. 8 is a schematic view showing another example of an apparatus for producing a shape-memory PBT laminate film;
Fig. 9 is a schematic view showing a further example of an apparatus for producing a shape-memory PBT laminate film;
Fig. 10 is a schematic view showing a still further example of an apparatus for producing a shape-memory PBT laminate film;
Fig. 11 is a schematic view showing a still further example of an apparatus for producing a shape-memory PBT laminate film;
Fig. 12 is a schematic view showing one example of an apparatus for producing a container with the lid of the present invention;
Fig. 13 is a perspective view showing a container for instant food, from which a lid composed of the shape-memory PBT laminate film of the present invention is opened to pour hot water thereinto;
Fig. 14 is a perspective view showing a container for instant food, from which a lid composed of the shape-memory PBT laminate film of the present invention is opened by partially tearing to pour hot water thereinto;
Fig. 15 is a perspective view showing a container with the lid of the present invention, which is used as a container for semisolid food;
Fig. 16 is a perspective view showing a container with the lid of Fig. 15 in an open state;
Fig. 17 is a schematic view showing the shape recovery of a shape-memory PBT laminate film used as a food tray;
Fig. 18 is a schematic view showing the steps of the production method of a PBT film by an inflation method;
Fig. 19 is a schematic side view showing one example of a bubble-cooling means;
Fig. 20(a) is a plan view showing one example of a rectifying plate;
Fig. 20(b) is a plan view showing another example of the rectifying plate;
Fig. 20(c) is a plan view showing a further example of the rectifying plate;
Fig. 21 is a schematic view showing a system for supplying a humid air;
Fig. 22 is a schematic view showing one example of the steps of the production method of a PBT film by a monoaxial orientating method;
Fig. 23 is a schematic view showing another example of the steps of the production method of a PBT film by a monoaxial orientating method;
Fig. 24 is a schematic view showing a further example of the steps of the production method of a PBT film by a monoaxial orientating method;
Fig. 25 is a schematic view showing one example of an apparatus for forming linear scratches in a progressing direction of a film;
Fig. 26 is a partial enlarged view showing the blowing of a compressed air onto a surface of a film sliding on a pattern roll in the apparatus shown in Fig. 25;
Fig. 27 is a partial, enlarged, cross-sectional view showing a film in sliding contact with a pattern roll in the apparatus shown in Fig. 25;
Fig. 28(a) is a front view showing one example of a nozzle together with its right side;
Fig. 28(b) is a front view showing another example of a nozzle together with its right side;
Fig. 28(c) is a schematic view showing the blowing of a compressed air onto a pattern roll by a nozzle with a hood;
Fig. 29 is a schematic side view showing another example of an apparatus for forming linear scratches in a progressing direction of a film;
Fig. 30 is a perspective view showing one example of an apparatus for forming linear scratches slanting to a progressing direction of a film;
Fig. 31(a) is a partial enlarged plan view showing a film in sliding contact with an endless pattern belt in the apparatus shown in Fig. 30;
Fig. 31(b) is a schematic cross-sectional view taken from the direction D in Fig. 31(a);
Fig. 32 is a schematic view showing another example of an apparatus for forming linear scratches slanting to a progressing direction of a film;
Fig. 33 is a partial enlarged plan view showing a film in sliding contact with a roll train in the apparatus shown in Fig. 32;
Fig. 34(a) is a partial enlarged plan view showing another example of an apparatus for forming linear scratches slanting to a progressing direction of a film;
Fig. 34(b) is a schematic view taken from the direction E in Fig. 34(a);
Fig. 35 is a partial enlarged plan view showing one example of an apparatus for forming linear scratches in a width direction to a progressing direction of a film;
Fig. 36 is a partial enlarged plan view showing another example of an apparatus for forming linear scratches in a width direction to a progressing direction of a film;
Fig. 37 is a partial enlarged plan view showing a further example of an apparatus for forming linear scratches in a width direction to a progressing direction of a film;
Fig. 38(a) is a partial enlarged plan view showing a still further example of an apparatus for forming linear scratches in a width direction to a progressing direction of a film; and
Fig. 38(b) is a schematic view taken from the direction F in Fig. 38(a).

### DETAILED DESCRIPTION OF THE PREFERRED EMBODIMENTS

### [1] Layer structure of shape-memory polybutylene terephthalate laminate film

The shape-memory polybutylene terephthalate (PBT) laminate film of the present invention comprises (a) a PBT film layer, and (b) at least one selected from the group consisting of a paper sheet, another resin film and a metal foil, or a laminate comprising it (hereinafter referred to simply as "another film or film laminate").

### (1) Polybutylene terephthalate film

The PBT film is essentially a film of a saturation polyester composed of 1,4-butanediol and terephthalic acid. Within ranges not deteriorating properties such as a thermal shrinkage resistance, etc., other diols than 1,4-butanediol and other carboxylic acids than terephthalic acid may be included as comonomers. Such diols may be, for instance, ethylene glycol, diethylene glycol, neopentyl glycol, 1,4-cyclohexanemethanol, etc. The dicarboxylic acids may be, for instance, isophthalic acid, sebacic acid, adipic acid, azelaic acid, succinic acid, etc. A specific example of PBT resins forming the PBT film may be, for instance, a homo-PBT resin commercially available from Toray Industries, Inc. under the tradename of "Toraycon."

The PBT resin is not restricted to PBT only, but may contain other thermoplastic resins within ranges not hindering the effects of the present invention depending on its applications. The other resins may be polyesters such as polyethylene terephthalate (PET) and polyethylene naphthalate (PEN); polyphenylene sulfide (PPS); polyamides (PA); polyimides (PI); polyamideimides (PAI); polyethersulfone (PES); poltetheretherketone (PEEK); polycarbonates; polyurethanes; fluororesins; polyolefins such as polyethylene and polypropylene; polyvinyl chlorides; elastomers, etc. When the other resins are contained, their proportions are preferably 5 to 20% by mass, more preferably 5 to 15% by mass, particularly 5 to 10% by mass, based on the entire PBT resin (100% by mass). Accordingly, unless otherwise particularly mentioned, it should be noted that the term "PBT resin" used herein includes both PBT only, and a composition comprising PBT and other resins.

The PBT film may properly contain plasticizers, stabilizers such as antioxidants, UV absorbents, etc., antistatics, surfactants, coloring agents such as dyes and pigments, lubricants for improving flowability, nucleating agents, inorganic fillers, etc., depending on the use of the shape-memory PBT laminate film.

Though not particularly restrictive, the thickness of the PBT film is preferably about 5 to 50 µm for practical applications. It is technically difficult to make the PBT film as thin as less than about 5 µm, resulting in a higher cost. On the other hand, when the PBT film is as thick as more than about 50 µm, the film is expensive, resulting in limited use for the resultant shape-memory PBT laminate films.

The production method of the PBT film is not particularly restricted, but may be an inflation method or a casting method. The PBT film is preferably produced by the inflation method or the casting method described below.

### (2) Other films or film laminates

### (a) Paper sheet

When the shape-memory PBT laminate film is used for lids for instant food containers, it preferably has a layer composed of a paper sheet as a layer for providing dead-folding characteristics. The types of papers for the paper sheet are not restricted, but may include synthetic papers. The thickness of the paper sheet is preferably about 60 to 110 g/m², more preferably about 75 to 90 g/m². When the thickness of the paper sheet is less than about 60 g/m², the paper sheet is easily foldable, failing to provide sufficient dead-folding characteristics. On the other hand, even when the thickness of the paper sheet is made more than about 110 g/m², there is no further improvement in dead-folding characteristics, resulting in only cost increase.

### (b) Sealant film

When the shape-memory PBT laminate film is used for lids for instant food containers, it has a sealant film heat-sealed to an upper flange of a container body. The sealant film may be formed by a polyethylene film, an unstretched polypropylene film, an ionomer film, a polystyrene film, etc. In order that a lid is easily peeled from the container body, the sealant film is preferably easy-to-peel. For this purpose, the sealant film preferably has relatively weak heat adhesiveness. Materials for the heat seal may be known hot melts.

Usable as the sealant films are, for instance, a polyethylene base film on the side of the paper sheet, and a laminate film with a low-molecular-weight polyethylene film on the side of the upper flange of the container body. The thickness of this polyethylene base film is preferably about 10 to 40 µm, more preferably about 20 to 30 µm. The thickness of the low-molecular-weight polyethylene film is preferably about 5 to 20 µm, more preferably about 7 to 15 µm. Such laminating polyethylene film is, for instance, 760FD commercially available from Toray Plastic Films Co., Ltd. Also usable as the sealant film is a film made of a mixture comprising an ethylene-vinyl acetate copolymer (EVA) and polyethylene. In the film made of this mixture, the polyethylene is preferably linear low-density polyethylene (LLDPE). The thickness of the film made of this mixture is also preferably about 10 to 40 µm, more preferably about 20 to 30 µm. The thickness of the hot-melt layer is preferably 10 to 50 µm, more preferably 20 to 40 µm.

A usable sealant film is also disclosed in Japanese Patent Application 2002-183197. The sealant film disclosed in Japanese Patent Application 2002-183197 is made of a resin composition comprising a linear ethylene-α-olefin copolymer of ethylene and an α-olefin having 3 to 18 carbon atoms, which has a density (JIS K6922) of 0.870 to 0.910 g/cm³, and MFR of 1 to 100 g/10 minutes (JIS K6921, at 190°C and under a load of 2.16kg), and polystyrene. Whichever polyethylene or polystyrene is used for the seal surface of the container body, the lid of the present invention comprising this sealant film can form a multi-sealant layer having both sealability and easy-to-open characteristic when heat-sealed to the seal surface of the container body.

### (c) Rigid film

To increase the rigidity of the shape-memory PBT laminate film, it may have a rigid film. The rigid film may be a PET film, a biaxially stretched polypropylene film (OPP film), a nylon film, etc. The use of a monoaxially orientated PET film or a PET film biaxially orientated to different degrees as the PET film is advantageous when the shape-memory PBT laminate film should be easy-to-tear. The monoaxially orientated PET film or the PET film biaxially orientated to different degrees may be, for instance, "Emblet PC" commercially available from Unitika Ltd.

### (d) Light-screening ink layer

When light screening is needed, the shape-memory PBT laminate film is provided with a light-screening ink layer or a metal foil layer. The light-screening ink is not particularly restrictive, as long as it is an ink containing a black or dark-color pigment or dye such as carbon black. The use of the light-screening ink layer makes it possible to avoid adverse effect on environment at the time of incineration. It also makes it possible to detect foreign metallic materials by a metal detector after sealing when the shape-memory PBT laminate film is used for a lid for an instant food container. This further improves the safety of instant food, and extremely decreases an examination cost because the metal detector can be utilized. When the shape-memory PBT laminate film having a metal foil layer is used for a lid for an instant food container, the metal foil is preferably an aluminum foil. The formation of an aluminum foil layer can provide excellent light screening, gas barrier, odor retention, etc.

Though depending on the concentration of black pigment or dye in the ink, the light-screening ink layer may generally have such thickness as sufficiently cutting ultraviolet rays and visible rays. The thickness of the aluminum foil is preferably 3 to 15 µm, more preferably 7 to 12 µm.

### (3) Examples of layer structure

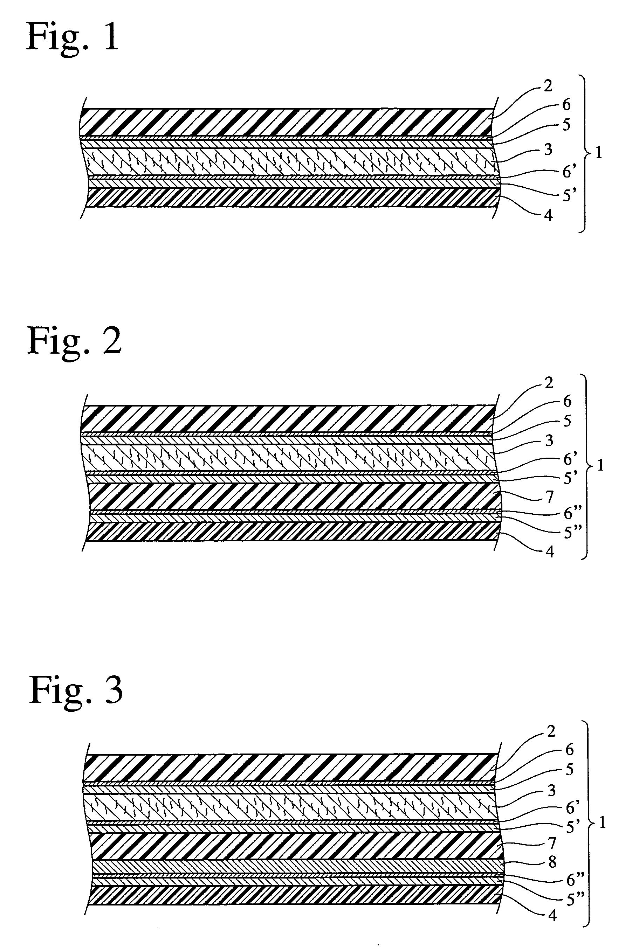

Figs. 1-4 illustrate various layer structures of the shape-memory PBT laminate film used as package sheets for lids for instant food containers. The laminate film 1 shown in Fig. 1 has a basic layer structure comprising a PBT film layer 2, a paper sheet 3 and a sealant film 4. There are an adhesive layer (I) comprising an adhesive layer 6 and an extrusion-laminated polyethylene layer (I) 5 between the PBT film layer 2 and the paper sheet 3, and an adhesive layer (II) comprising an adhesive layer 6' and an extrusion-laminated polyethylene layer (II) 5' between the paper sheet 3 and the sealant film 4. In the case of the layer structure shown in Fig. 1, the thickness ratio of an outer layer comprising the PBT film 2 and the adhesive layer (I) (5 and 6) to an inner layer comprising the adhesive layer (II) (5' and 6') and the sealant film 4, which is an outer layer/inner layer thickness ratio, is preferably 100/35 to 100/100. Within this range, the PBT film 2 can effectively exhibit curlability and dead-folding characteristics. The terms "outer" and "inner" used herein mean the outside and inside of a lid, when the shape-memory PBT laminate film is used for the lid for an instant food container, etc.

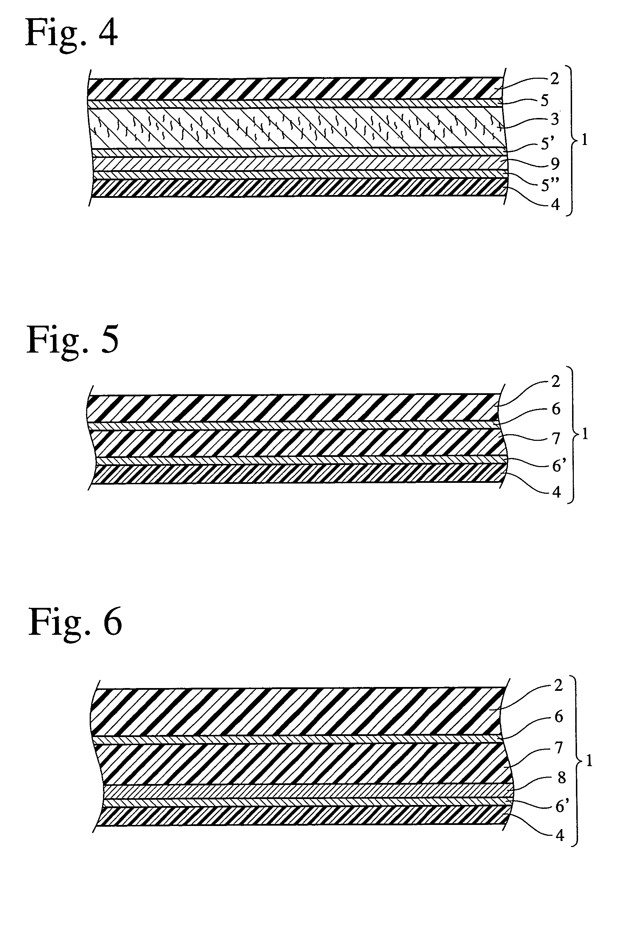

Fig. 2 shows an example in which a rigid film 7 is inserted between the paper sheet 3 and the sealant film 4 to increase the rigidity of the shape-memory PBT laminate film. In Fig. 2, 5" represents an extrusion-laminated polyethylene layer (III), and 6" represents an adhesive layer (III).

Fig. 3 shows an example in which a light-screening ink layer 8 is added inside the polyethylene terephthalate layer 7 to impart good light screening. The light-screening ink layer 8 is preferably printed on the polyethylene terephthalate (PET) film in advance. The light-screening ink layer 8 may also be formed on the inner surface of the PBT film layer 2, or on a surface of the paper sheet 3 (for instance, an inner surface of the paper sheet 3). The laminate film shown in Fig. 4 comprises a metal foil layer 9 as a light-screening layer.

Figs. 5 and 6 illustrate examples of the layer structure shape-memory PBT laminate film, which is used as a package sheet for a lid for a container for semisolid food such as jelly, pudding, etc. The laminate film shown in Fig. 5 has a basic structure comprising a PBT film layer 2, a rigid film 7 and a sealant film 4. There are an adhesive layer (for instance, hot-melt layer) 6 between the PBT film layer 2 and the rigid film 7, and an adhesive layer (for instance, hot-melt layer) 6' between the paper sheet 3 and the sealant film 4. Fig. 6 shows an example, in which a light-screening ink layer 8 is formed on the inner surface of the rigid film 7 to impart good light screening.

Because the lid for a container for semisolid food is not required to have resealability after pouring hot water, unlike lids for instant food containers, it sometimes does not have a paper sheet or an aluminum foil having strong dead-folding characteristics. However, if only two layers of the PBT film and the polyethylene film were adhered to each other, the resultant laminate film would be likely to have insufficient shape recoverability, because deformation is easily absorbed by the polyethylene film when the PBT film is caused to recover the first shape. Accordingly, in the case of producing a shape-memory PBT laminate film having a PBT film layer and a polyethylene film layer, it is preferable to insert the above rigid film between the PBT film layer and the polyethylene film layer.

### [2] Production method of shape-memory polybutylene terephthalate laminate film

The production method of the shape-memory PBT laminate film will be explained in detail below referring to the drawings.

### (1) First production method

The first production method of the shape-memory PBT laminate film comprises the steps of (a) subjecting a laminate film of the above PBT film and another film or film laminate to a shaping treatment (cold working) at a temperature T₁ equal to or lower than the Tg of the PBT, while maintaining the first shape; (c) deforming the shaped laminate film to a second shape at a temperature T₂ higher than the glass transition temperature Tg; and (c) cooling it to a temperature T₃ equal to or lower than the glass transition temperature, so that it is fixed to the second shape.

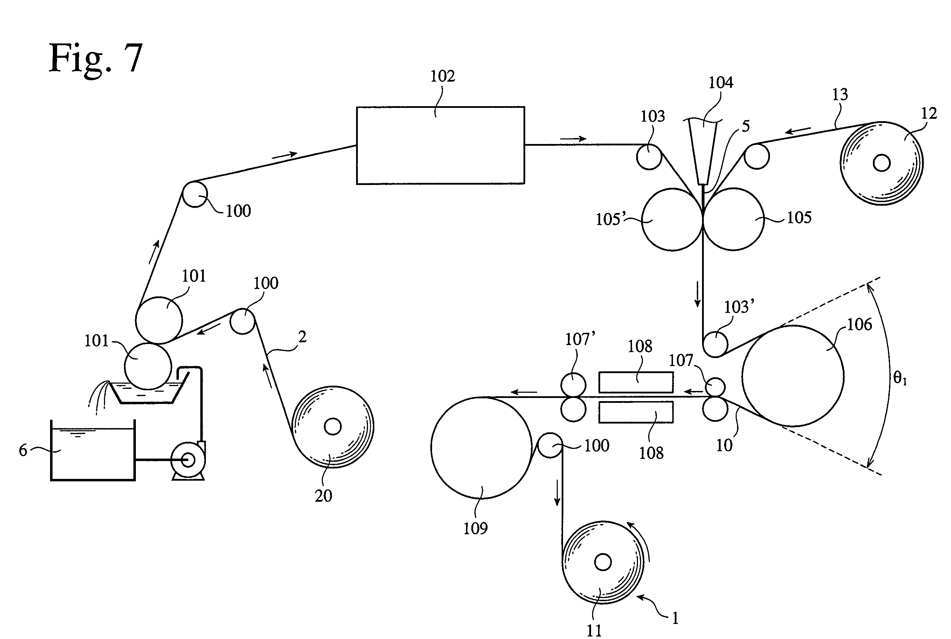

Explanation will be made below taking for example a case where the first shape is a curled shape, and the second shape is a flat shape. Fig. 7 is a schematic side view showing one example of an apparatus for producing the shape-memory PBT laminate film. After passing a guide roll 100, the PBT film 2 unwound from an original PBT film wound around a reel 20 is coated with an adhesive (for instance, hot-melt adhesive) 6 on one surface by gravure rolls 101, 101, and the resultant adhesive layer is dried by a drying furnace 102. The PBT film 2 passes a pressure-controlling roll 103 and then between a cooling roll 105 and a rubber roll 105', so that it is laminated with another film or film laminate 13 unwound from a reel 12 via a molten polyethylene 5 extruded from a die 104, in such a manner that the molten polyethylene 5 faces the adhesive layer of the PBT film 2 (extrusion lamination). The resultant laminate film is subjected to a shaping treatment at a temperature T₁ equal to or lower than the Tg of PBT, while being conveyed by a cold-working roll 106. This imparts curlability to the PBT film layer in the laminate film. The curled laminate film 10 is deformed flat between two nip rolls 107, 107', while rapidly annealing it at a temperature T₂ higher than Tg by a heater 108. The laminate film 10 is then brought into contact with a cooling roll 109, so that it is cooled to a temperature T₃ equal to or lower than the above Tg. This fixes the laminate film to a flat shape. Thereafter, the curlable laminate film is wound around a reel in an uncurling direction, to provide a wound film 11 (shape-memory PBT laminate film 1). Different from the dead-folding characteristics by which the shape-memory PBT laminate film 1 can be kept in a bent state, the curlability is a property that when the shape-memory PBT laminate film 1 is exposed to a temperature equal to or higher than the temperature at which it has been curled, it can recover a curled shape from the second shape (flat shape, oppositely curled shape, etc.) given after curling, namely the shape-memory PBT laminate film 1 can be bent.

The cold-working temperature T₁, which should be Tg of PBT or lower, is preferably 35°C or lower, more preferably 15 to 25°C. The temperature T₃, at which the curlable laminate film 10 is cooled after annealing, should be the above Tg or lower, and is preferably 15 to 25°C. The PBT film generally has Tg of about 20 to 45°C. Tg can be measured by JIS K7121.

The annealing treatment for deforming the curlable laminate film flat at a temperature T₂ higher than Tg should be carried out to such an extent that the curlability provided by the cold working does not disappear. Accordingly, the temperature T₂ is preferably higher than 45°C and 65°C or lower, to which the laminate film is rapidly heated, deformed and then annealed for 30 to 60 seconds. A tension of 5 to 10 kgf/m (width) is applied to the laminate film to keep it flat between two nip rolls 107, 107'. After the annealing treatment at a temperature T₂, the laminate film is preferably rapidly cooled to a temperature T₃. In Fig. 7, the curlable laminate film 10 is heated on both surfaces by heaters 108, 108, the heater 108 may be disposed only on the side of the PBT film layer of the curlable laminate film 10. A heating air ejected from the heater 108 may be blown onto the PBT film layer of the curlable laminate film 10 by a nozzle.

In the embodiment shown in Fig. 7, after the curlable laminate film 10 is cooled to a temperature T₃, it is wound in an uncurling direction with another film or film laminate layer inside. To avoid that the curlability given by the cold working disappears, and to suppress the recovery of the curled shape as much as possible, the winding temperature and the temperature for storing the laminate film in a wound state are preferably near the temperature T₁. Because such temperatures can keep the shape-memory PBT laminate film 1 in a flat state, the curlable laminate film 10 unwound from the wound film 11 (shape-memory PBT laminate film 1) is substantially flat.

When the shape-memory PBT laminate film is used for lids for instant food containers and semisolid food containers, another film or film laminate laminated to the PBT film is constituted in advance such that the resultant shape-memory PBT laminate film has the layer structure described in [1] (3) above. Another film or film laminate 13 may be formed by an extrusion lamination method or a dry lamination method, though the extrusion lamination method is more preferable.

As shown in Fig. 7, the winding of the laminate film around the cold-working roll 106 is preferably such that an angle θ₁ between the winding and unwinding directions of the laminate film is in a range of 45° to 60°, to impart sufficient curlability to the PBT film 2. To set the angle θ₁ at the desired value, the positional relation of the cold-working roll 106 to the pressure-controlling roll 103' should be properly adjusted. The cold-working roll 106 preferably has a diameter of 20 to 80 cm to impart sufficient curlability to the PBT film 2. The peripheral speed of the cold-working roll 106 is usually 30 to 100 m/minute.

When the PBT film 2 and the another film or film laminate 13 are caused to pass between the cooling roll 105 and the rubber roll 105' for adhesion, a tension of 4 kgf/m (width) or more is usually applied to the PBT film 2 by the pressure-controlling roll 103. Particularly when a tension of 10 to 20 kgf/m (width) is applied to the PBT film 2, the PBT film 2 can be stretched to an elastically shrinkable degree in a longitudinal direction while being adhered to another film or film laminate 13. This makes it possible to adhere the PBT film 2 to another film or film laminate 13 in a state where the elongated PBT film 2 keeps an elastic recovery force. The passage "in a state where the elongated PBT film 2 keeps an elastic recovery force" means a state where the PBT film 2 keeps a force to shrink to the original shape when a force to fix the elongation is removed. This state further improves the curlability of the shape-memory PBT laminate film 1. The passage "stretched to an elastically shrinkable degree" generally means that the PBT film is stretched by about 1 to 3% to such an extent that no wrinkle appears on the PBT film.

Though another film or film laminate 13 is adhered to only one surface of the PBT film 2 in the embodiment shown in Fig. 7, the films or film laminates 13 may be adhered to both surfaces of the PBT film 2 and then provided with curlability.

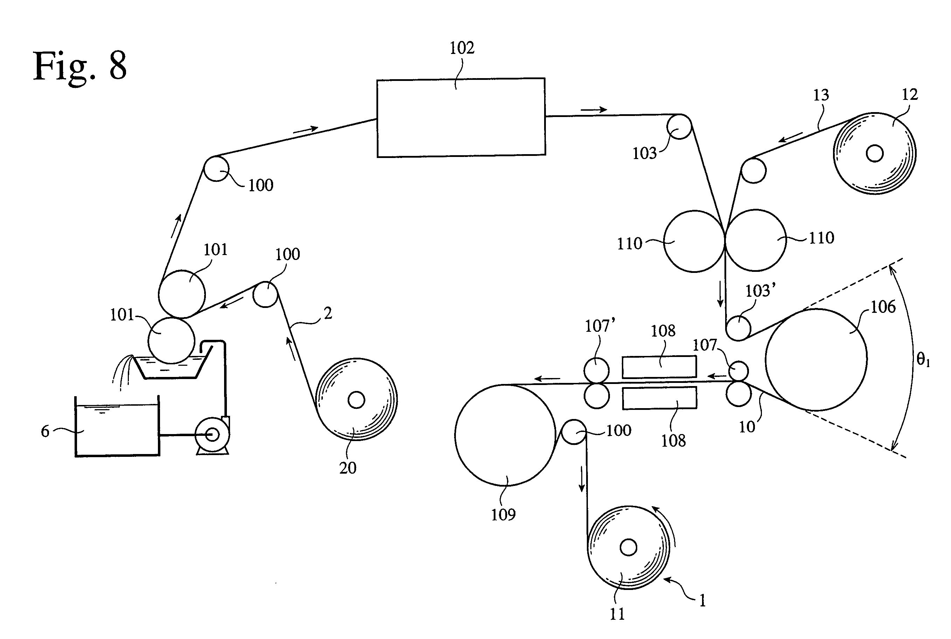

Fig. 8 is a schematic side view showing another example of an apparatus for producing the shape-memory PBT laminate film. The same reference numerals are assigned to the same members or portions as in the embodiment shown in Fig. 7. This embodiment is the same as the embodiment shown in Fig. 7 except that the PBT film 2 is adhered to another film or film laminate 13 by a dry lamination method. The PBT film 2 provided with an adhesive layer passes between a pair of heat rolls 110, 110 via a pressure-controlling roll 103 with the adhesive layer attached to another film or film laminate 13. When strong adhesion strength is needed, it is preferable to adhere the PBT film 2 to another film or film laminate 13 by the extrusion lamination method shown in Fig. 7.

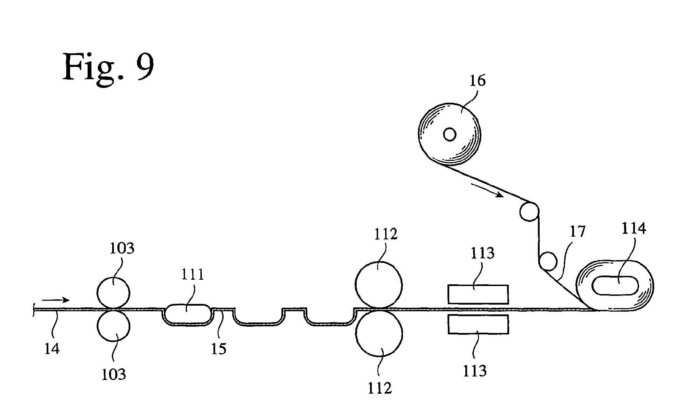

Next, explanation will be made, taking for example a case where the shape-memory PBT laminate film is in a tray shape as the first shape and in a flat shape as the second shape. Fig. 9 shows one example of an apparatus for producing such a shape-memory PBT laminate film. The same reference numerals are assigned to the same members or portions as in the embodiment shown in Fig. 7. First, another film or film laminate is adhered to one or both surfaces of the PBT film by an extrusion lamination method or a dry lamination method. The resultant laminate film 14 passes through pressure-controlling rolls 103, 103, and subjected to cold working by pressing a tray-shaped male mold 111 at the above temperature T₁, thereby intermittently forming a tray shape transferred from the press mold 111 in the laminate film 14. The shaped laminate film 15 is caused to pass between a pair of annealing rolls 112, 112, so that it is annealed at the above temperature T₂ to become substantially flat. It is then cooled to the above temperature T₃ by cooling means 113, 113. The resultant substantially flat laminate film 15 is laminated with a coating film 17 unwound from a reel 16, and wound around a roll 114 having the same shape as the press mold 111 to provide a wound film. The resultant laminate film does not have apparent deformation, with deformation along the outer shape of the press mold 111 disappearing. The PBT film 2 is cold-worked at a temperature T₁ for 10 to 60 seconds, while being pressed by the press mold 111. Though the tray-shaped press mold 111 is used in the embodiment shown in Fig. 9, any press mold for memorizing a desired shape may properly be used.

### (2) Second production method

The second production method of the shape-memory PBT laminate film comprises the steps of (a) (i) producing a laminate film of the above PBT film and another film or film laminate in advance, and subjecting it to a shaping treatment while maintaining it in a first shape at a temperature T₄ higher than Tg and lower than the melting point, or (ii) producing a laminate film having the first shape by subjecting the above PBT film to a shaping treatment at the temperature T₄ while maintaining it in the first shape and then laminating it with another film or film laminate; (b) cooling the resultant shaped laminate film to a temperature T₅ equal to or lower than Tg to fix it to the first shape; (c) deforming the shaped laminate film to the second shape at a temperature T₆ higher than Tg and lower than the temperature T₄; and then (d) cooling the shaped laminate film to a temperature T₇ equal to or lower than Tg to fix it to the second shape.

Because the PBT resin has Tg of 22 to 45°C, close to room temperature, it is easily heated to Tg or higher and cooled to lower than Tg. In addition, because the PBT resin has a melting point as high as about 230°C, there is a wide temperature range between Tg and the melting point, resulting in a large difference between the temperature T₄ and the temperature T₅. Accordingly, the above operations (A) to (D) can be easily conducted.

Explanation will be made below taking for example a case where the first shape is a curled shape, and the second shape is a flat shape.

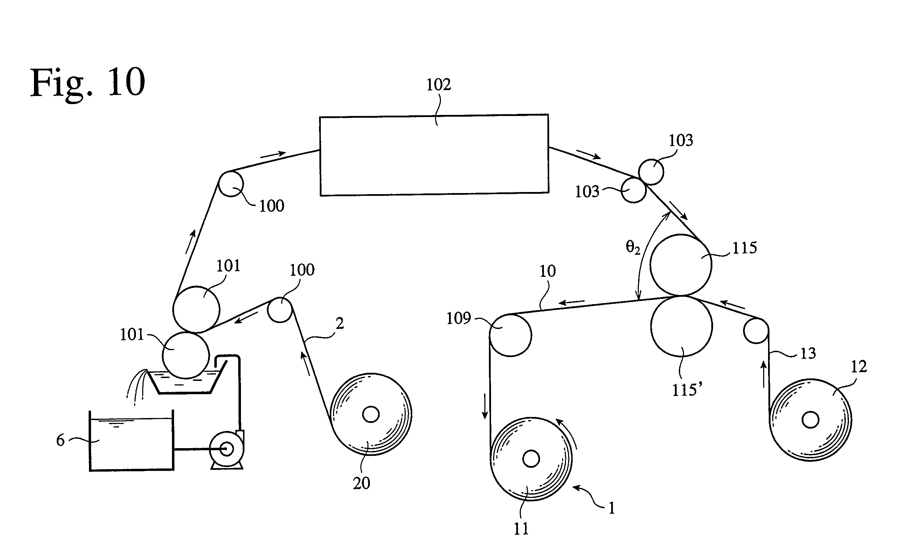

Fig. 10 shows an example of an apparatus for producing the shape-memory PBT laminate film by the second method. In this embodiment, the shaped PBT film provided with curlability in advance is adhered to another film or film laminate. This embodiment is the same as the embodiment shown in Fig. 7, until the steps of coating the PBT film 2 with an adhesive 6 on one surface and drying the resultant adhesive layer in a drying furnace 102. As shown in Fig. 10, the PBT film 2 after drying the adhesive layer is conveyed by pressure-controlling rolls 103 and then by a shaping heat roll 115, so that it is treated to have curlability at the above temperature T₄ with a surface having no adhesive layer in contact with the heat roll 115. Thereafter, it is caused to pass between the heat roll 115 and a roll 115' in contact therewith for adhesion, with another film or film laminate 13 attached to the adhesive layer of the PBT film 2. The resultant curlable laminate film 10 is brought into contact with a cooling roll 109 so that it is cooled to a temperature T₅ equal to or lower than the above Tg, and then wound around a reel in an uncurling direction to provide a wound film 11. The resultant wound film 11 is subjected to a heating treatment at a temperature T₆ higher than the above Tg and lower than temperature T₄, and then cooled to a temperature T₇ equal to or lower than the above Tg to provide the shape-memory PBT laminate film 1. After making the wound film 11, it is heat-treated at the temperature T₆, and then cooled to the temperature T₇ so that the above laminate film does not have an apparent curled shape. A laminate film substantially flat on appearance is thus obtained. The means for heating or cooling the wound film 11 is not restrictive; for instance, a method of introducing the wound film 11 into a bath and heating the bath by a heater therearound, and a method of cooling it by a cooling means.

The heating temperature T₄ at the heat roll 115 should be a temperature higher than the Tg of PBT and lower than the melting point of PBT, and it is preferably 75 to 100°C, more preferably 90 to 100°C. The cooling temperature T₅ at the cooling roll 109 should be a temperature equal to or lower than the above Tg, and it is preferably 40°C or lower. The cooling of the curlable laminate film 10 may be conducted by using a cooling air instead of the cooling roll 109. The heating temperature T₆ of the wound film 11 should be higher than the above Tg and lower than the temperature T₄, and it is preferably 45 to 65°C, and more preferably 45 to 50°C. The heating treatment at the temperature T₆ is preferably conducted for about 24 hours. The cooling temperature T₇ of the wound film 11 after the heating treatment should be the above Tg or lower, and it is preferably 40°C or lower. In the embodiment shown in Fig. 10, the curlable laminate film is wound in an uncurling direction with another film or film laminate layer inside to make the second shape substantially flat. This efficiently makes the film flat.

The winding of the PBT film 2 around the heat roll 115 is preferably such that an angle θ₂ between the winding direction of the PBT film 112 shown in Fig. 10 and the unwinding direction is in a range of 45° to 60°. With this angle, sufficient curlability is given to the PBT film 2. To set the angle θ₂ at the desired value, the positional relation of the heat roll 115 to the pressure-controlling rolls 103, 103 should be properly adjusted. The heat roll 115 preferably has a diameter of 60 to 80 cm to impart sufficient curlability to the PBT film 2. The peripheral speed of the heat roll 115 is usually 30 to 100 m/minute.

As described in (1) above with respect to the first production method, when the PBT film 2 and another film or film laminate 13 are caused to pass between the heat roll 115 and the abutting roll 115' for adhesion, a tension of 4 kgf/m (width) or more is usually applied to the PBT film 2 by a pair of pressure-controlling rolls 103, 103. Like the first production method, a tension of 10 to 20 kgf/m (width) is preferably applied to the PBT film 2.

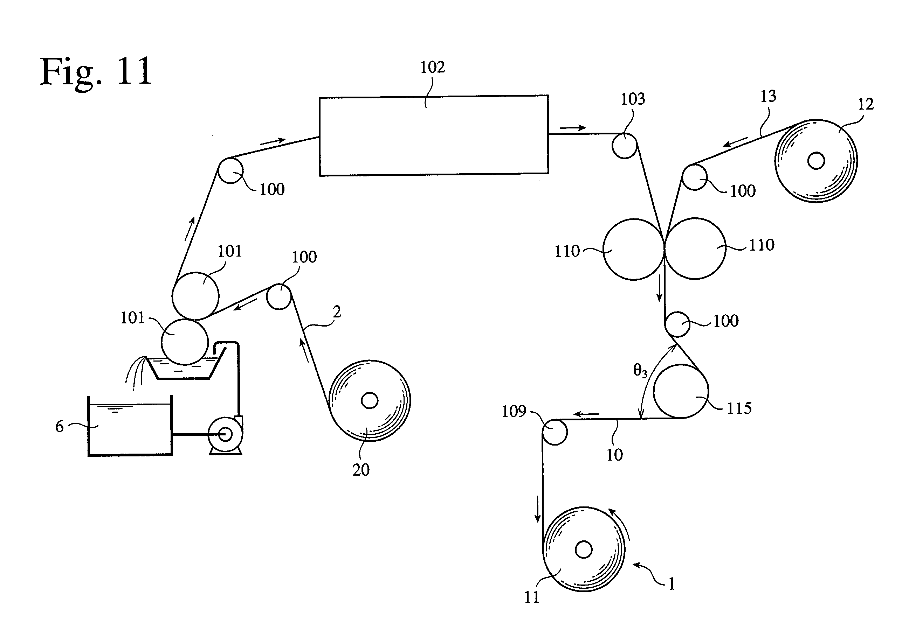

Fig. 11 shows another example of an apparatus for producing the shape-memory PBT laminate film by the second method. The same reference numerals are assigned to the same members or portions as in the embodiment shown in Fig. 7. In this embodiment, after producing a laminate film comprising a PBT film in advance, the PBT film layer is provided with curlability. This embodiment is the same as the embodiment shown in Fig. 8, until the step of adhering the PBT film 2 to another film or film laminate 13 by a pair of heat rolls 110, 110. The resultant laminate film is shaped at a temperature T₄ higher than the Tg of PBT and lower than the melting point of PBT while being conveyed by the heat roll 115, thereby imparting curlability to the PBT film layer of the laminate film. The resultant curlable laminate film 10 is brought into contact with the cooling roll 109 so that it is cooled to a temperature T₅ equal to or lower than the above Tg, and then wound around a reel in an uncurling direction to provide a wound film 11. The resultant wound film 11 is heat-treated at a temperature T₆ higher than the above Tg and lower than the temperature T₄ as described above, and then cooled to a temperature T₇ equal to or lower than the above Tg to provide the shape-memory PBT laminate film 1.

In the embodiment shown in Fig. 11, the requirements of the temperatures T₄ to T₇ are the same as in the embodiment shown in Fig. 10. An angle θ₃ between the winding direction and the unwinding direction of the laminate film 10 is preferably in a range of 45° to 60°. Though another film or film laminate 13 is adhered to only one surface of the PBT film 2 in the embodiment shown in Fig. 11, it is possible to impart shape-memory characteristics after another film or film laminate 13 is adhered to both surfaces of the PBT film 2.

By the second production method, too, a shape-memory PBT laminate film that has a tray shape as the first shape and a flat shape as the second shape can be produced. Because a production apparatus therefor may be the same as shown in Fig. 9, it will be explained referring to Fig. 9. First, the PBT film is adhered to another film or film laminate to provide a PBT laminate film having another film or film laminate one or both surfaces of the PBT film. The resultant laminate film 14 passes through a pair of pressure-controlling rolls 103, 103, and heat-treated at a temperature T₄ higher than the Tg of PBT and lower than the melting point of PBT, while being intermittently pressed by a tray-shaped male mold 111 such that it is given a shape in accordance with the outer shape of the press mold 111. The shaped laminate film 15 is brought into contact with a cooling tray-shaped press mold or a cooling air downstream of the press mold 111 so that it is cooled to a temperature T₅ equal to or lower than the above Tg. It is then caused to pass between a pair of heat rolls 112, 112, so that it is heat-treated at a temperature T₆ higher than the above Tg and lower than the temperature T₄. Subsequently, it is cooled to a temperature T₇ equal to or lower than the above Tg by the cooling means 113, 113 to fix a flat shape. The heating treatment of the laminate film 14 at the temperature T₄ while being pressed by the press mold 111 may be 10 to 60 seconds.

### [3] Shape-memory polybutylene terephthalate laminate film

The shape-memory PBT laminate film obtained by the above first method substantially recovers the first shape because of the shape recoverability at a temperature equal to or higher than T₁. It is not necessarily clear why the PBT film recovers the first shape at a temperature equal to or higher than T₁ even though it is fixed to the second shape by the above annealing and cooling steps. However, it may be considered that strain is kept in the entanglement of polymer chains, for instance, by cold working at the temperature T₁, and that most of this strain is not relaxed by annealing at the temperature T₂ for a short period of time, so that the first shape is recovered at a temperature equal to or higher than T₁.

The shape-memory PBT laminate film obtained by the above second method substantially recovers the first shape because of the shape recoverability at a temperature equal to or higher than T₄. It is not necessarily clear why the PBT film recovers the first shape at a temperature equal to or higher than T₄, even though it is fixed to the second shape by the above thermal deformation and cooling steps. However, It may be considered that the PBT film is easily thermally shaped, for instance, at the temperature T₄ or higher because of a rubbery state, with its deformation fixed at the temperature T₅ because of a glassy state, and that though the deformation at the temperature T₄ is partially relaxed by the thermal deformation at the temperature T₆ so that PBT film is turned to have the second shape, it recovers the first shape at the temperature T₄ or higher because the orientation of most molecular chains does not change.

The shape-memory PBT laminate films having shape recoverability to the first shape is useful as various package sheets. Particularly because the PBT laminate films having a curled shape memory produced by the method described in [2] above can be sufficiently curled when used for lids containing no metal foils such as an aluminum foil, etc. such lids are suitable as package sheets for instant food containers. In the production of an instant food container, the shape-memory PBT laminate film is punched out by a lid-sealing means, and the resultant lid is immediately heat-sealed to the container. At the heat-sealing step, a seal portion of the lid is usually heated to 120 to 160°C by a seal head of the lid-sealing means, and because heat is also transmitted to other portions than the seal portion of the lid, the lid is treated at a temperature equal to or higher than T₁ or T₄. Accordingly, the lid recovers a curled shape, so that it is flat when sealed to the container, but curled when peeled from the container. Particularly when the PBT film is adhered to a paper sheet in an elongated state where the PBT film has an elastic recovery force as described above, the laminate film has further improved curlability.

### [4] Production method of container having lid composed of shape-memory polybutylene terephthalate laminate film

The production method of a container having a lid composed of a shape-memory PBT laminate film will be explained below. Because the shape-memory PBT laminate film 1 obtained by the method described in [2] above is made substantially flat on appearance in its production step and stored as a wound film 11, it is substantially flat on appearance when unwound. However, when the shape-recovering temperature is relatively low, when it is stored for a long period of time, or when it is exposed to room temperature in the hot summer time, etc., it sometimes gradually recovers a curled shape during storing, or deflects toward the opposite direction to the memorized curled shape due to winding during storing.

The container with a lid composed of a shape-memory PBT laminate film is produced by punching out the shape-memory PBT laminate film having a memorized curled shape, and heat-sealing it to the container. However, unless the shape-memory PBT laminate film is substantially flat when unwound, it cannot be heat-sealed to the container, or even if possible, defective products with deflected lids are produced. Accordingly, in the production of the container with a lid, the shape-memory PBT laminate film, which is not flat when unwound, is made substantially flat immediately before heat-sealing.

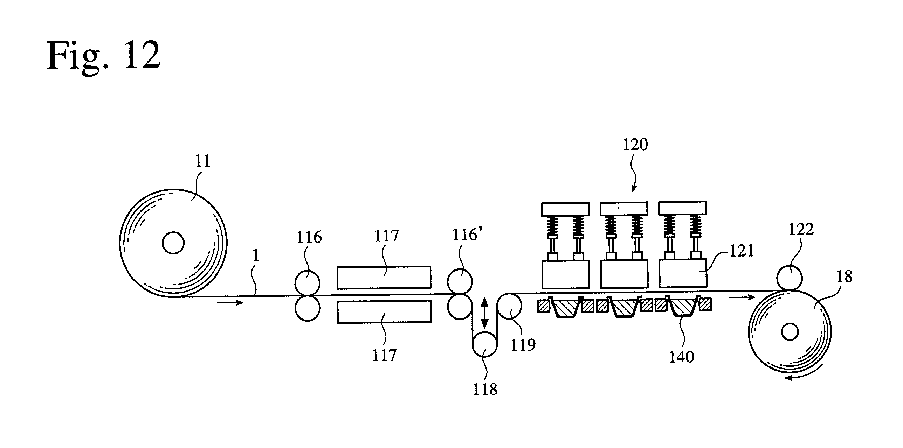

Fig. 12 is a schematic side view showing one example of an apparatus for a container having a lid composed of a shape-memory PBT laminate film. The shape-memory PBT laminate film 1 unwound from the wound film 11 is annealed by heating it by heaters 117, 117 to a temperature T₈ higher than the Tg of PBT and pressing it between two nip rolls 116, 116', so that it becomes substantially flat on appearance. The substantially flat shape-memory PBT laminate film 1 is punched out and immediately heat-sealed to the container 140 by a lid-sealing means 120 having a seal head 121 moving up and down. If necessary, an inert gas may be blown into the container.

The annealing at the temperature T₈ is conducted to such an extent that the shape-memory PBT laminate film does not lose memorized curlability. Thus, the temperature T₈ is preferably 80 to 120°C, more preferably 90 to 100°C. The shape-memory PBT laminate film is rapidly heated to the temperature T₈ and kept flat for 30 to 60 seconds for annealing. A tension of 5 to 10 kgf/m (width) is applied to make the laminate film flat between the two nip rolls 116, 116'. The moving speed of the shape-memory PBT laminate film 1 is usually 30 to 100 m/minute. Though both surfaces of the shape-memory PBT laminate film 1 are heated by the heaters 117, 117 in Fig. 12, a heater 117 may be disposed only on the side of the PBT film layer when the shape-memory PBT laminate film 1 has the PBT film layer only on one side. A heating air ejected from the heater 117 may be blown by a nozzle onto the PBT film layer of the shape-memory PBT laminate film 1.

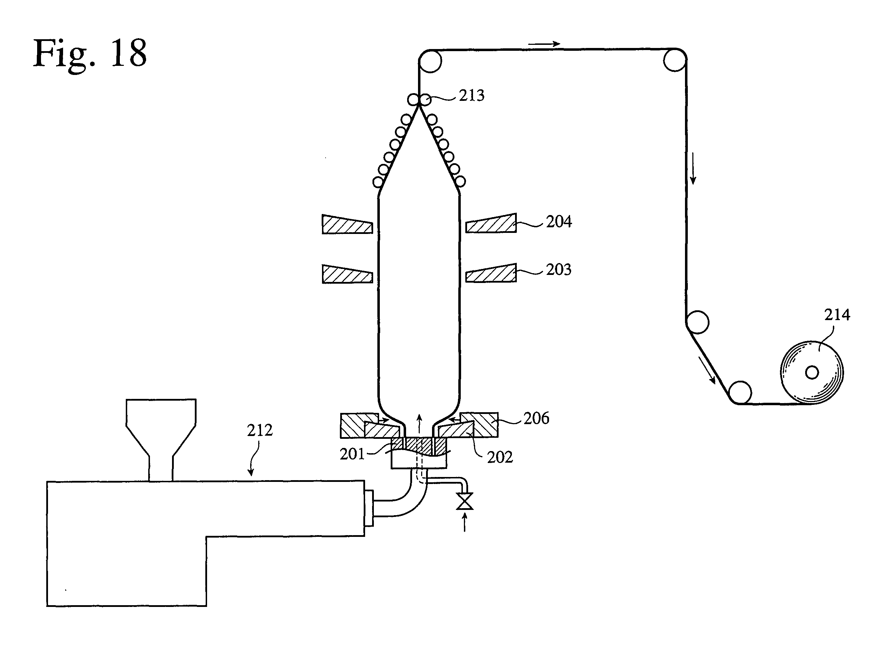

Because the punching of the lid and its heat sealing to the container 140 are conducted intermittently, a deflection-preventing roll 118 movable up and down is preferably disposed as shown in Fig. 12, such that the shape-memory PBT laminate film 1 is not deflected between the guide roll 119 and the abutting roll 122 to keep a constant tension. In Fig. 12, 18 represents a wound film of the shape-memory PBT laminate film 1 after punching out the lids.

During the heat sealing, in which a seal portion of the lid is usually heated to 120 to 160°C by the seal head of the lid-sealing means 121, heat is also added to other portions of the lid than the seal portion, so that the lid is treated at a temperature equal to or higher than T₁ or T₄. Accordingly, the lid recovers the curled shape, so that it is curled when peeled form the container though it is flat while being sealed.

### [5] Container for food

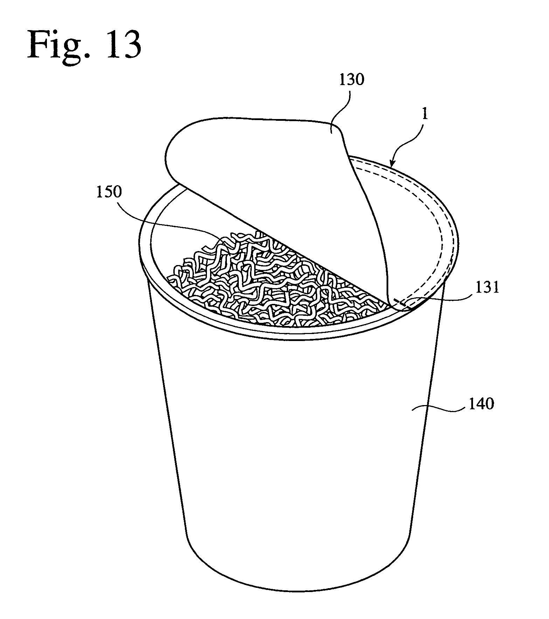

The lid for a container obtained by the production method described in [4] above exhibits a curled shape due to shape memory when peeled from the container. For instance, when the shape-memory PBT laminate film is used for the lid for an instant food container, as shown in Fig. 13, a flap formed by peeing the lid 1 from the container body 140 until a mark 131 with a tab 130 of the lid 1 gripped is sufficiently curled even if the lid 1 does not have an aluminum layer. Particularly when the PBT film is adhered to the paper sheet in an elongated state in which the PBT film has an elastic recovery force as described above, the resultant laminate film has further improved curlability. When the shape-memory PBT laminate film is used for a lid for an instant food container, its layer structure is preferably as shown in Figs. 1 to 4 as described in [1] (3) above.

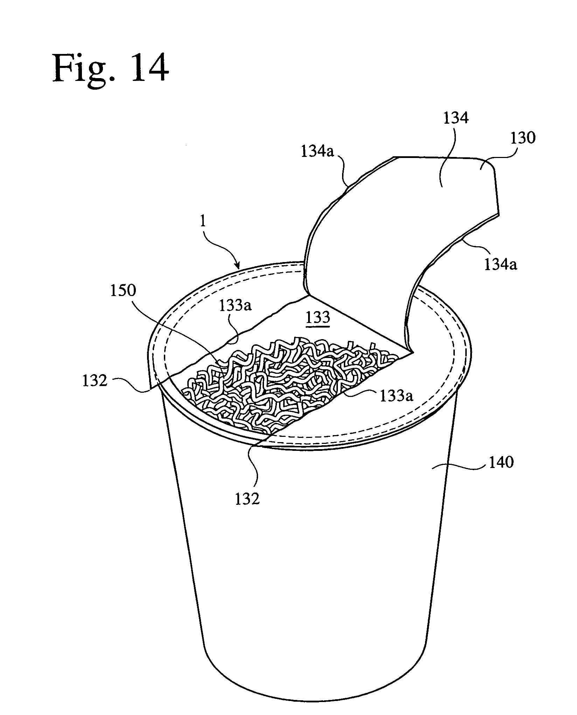

When the shape-memory PBT laminate film having a PBT film layer having linear scratches described below is used for a lid for an instant food container, as shown in Fig. 14, the formation of notches 132, 132 on both sides of the tab 130 makes it easy to partially open the lid 1. When the lid 1 is pulled toward the opposite side with the tab 130 of the lid 1 gripped by fingers, the lid 1 can be torn straight from the notches 132, 132, resulting in an opening 133 in the lid 1. The flap 134 formed by tearing is sufficiently kept curled. Accordingly, hot water can be poured into the container through the opening 133 without needing further handling.

When the flap 134 is returned to the original position after pouring hot water, jagged rupture portions 134a, 134a of the paper one or both sides of the flap 134 engage jagged rupture portions 133a, 133a of the paper at the opening 133, so that the flap 134 does not lift up. In this case, the opening 133 has a smaller area than that of the opening of a conventional full-open lid, and the flap 134 is kept engaging the opening 133. Accordingly, even if the container 140 erroneously falls, only a small amount of the hot water leaks. In Fig. 14, 150 represents dried noodle.

The container body 140 may be formed, for instance, by paper, synthetic resins such as foamed polystyrene, etc. The paper container body is advantageous in easy incineration and the generation of no gas exerting adverse effects on the environment by incineration. The foamed polystyrene container body is advantageous in excellent temperature-keeping properties. The shape of the container body 140 is not restricted to that depicted, but may be variously modified depending on the types of contents.

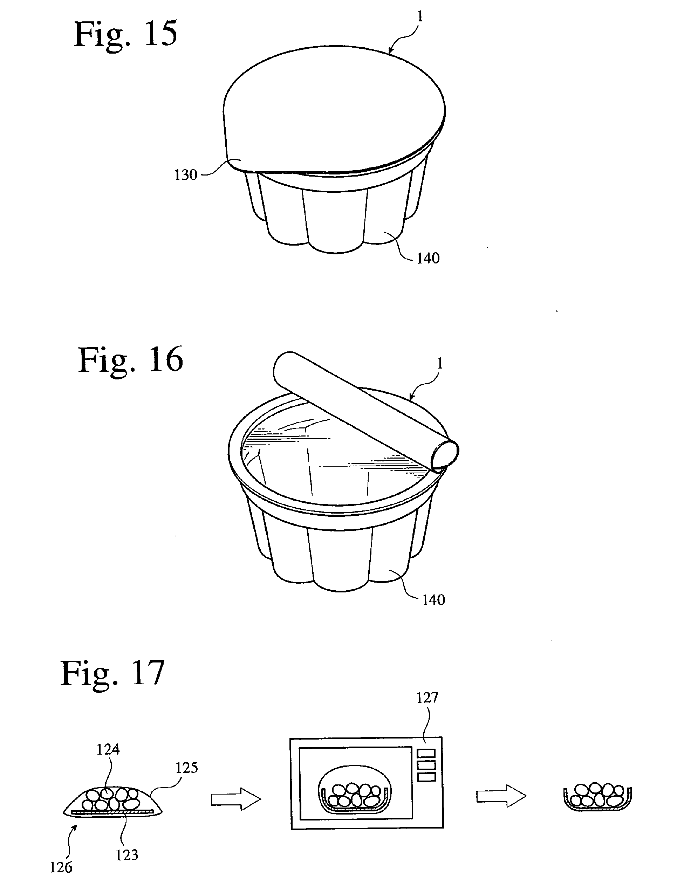

Figs. 15 and 16 show an example, in which the shape-memory PBT laminate film is used for a lid for a container for semisolid food such as jelly, pudding, etc. When the shape-memory PBT laminate film is used for the lid for a semisolid food container, its layer structure is typically as shown in Figs. 5 and 6 as described in [1] (3) above. As shown in Fig. 15, the lid 1 in a state sealed to the container 140 is flat. However, because the lid 1 has recovered a curled shape when heat-sealed to the container 140, though flat on appearance, the lid 1 composed of the shape-memory PBT laminate film without the paper sheet and the aluminum foil is strongly curled because of the shape memory when peeled from the container 140, as shown in Fig. 16. The container body 140 can be made of synthetic resins such as polypropylene, polyethylene, etc. The shape of the container body 140 is not restricted to that depicted, but may be variously modified depending on the types of contents. The lids having such strong curlability are suitable as lids for portion packs of milk for coffee, etc.

When the shape-memory PBT laminate film memorizing a tray shape described in [2] above is cut to a unit length of each tray shape while being flat, it can be used as a food tray as it is. As shown in Fig. 17, for instance, after an instant frozen food 124 is poured into the resultant food tray 123, it is covered with a wrapping film 125 to provide a wrapped item 126. As shown in Fig. 17, the wrapped item 126 is heated by a microwave oven 127, etc. to eat. At this time, the food tray 123 is heated at a temperature equal to or higher than the temperature T₁ or T₄ for a proper period of time, so that the food tray 123 recovers the tray shape given by the press mold 111. The shape-memory PBT laminate film thus used for the food tray 123 is substantially flat with a small volume in a state of the wrapped item 126, convenient for transportation and display, and recovers the tray shape for ease to eat by a heating treatment.

The wrapping film 125 of the food tray 123 is preferably provided with a lot of substantially parallel linear scratches on at least one surface by the method described below. The substantially parallel linear scratches provide the wrapping film 125 with easy-to-straight-tear characteristics in one direction regardless of its orientation, so that the wrapping film 125 can be torn straight along the linear scratches from any point. Thus, the wrapping film 125 can be easily partially open when to eat. Because such linear scratches do not penetrate the film, the wrapping film 125 has an excellent gas barrier after provided with the linear scratches.

### [6] Production method of polybutylene terephthalate film

The PBT film used for the shape-memory PBT laminate film of the present invention is preferably produced by an inflation method or a monoaxial orientating method described below. The shape-memory PBT laminate film obtained by using the PBT film obtained by these methods can stably recover the given shape.

### (1) Polybutylene terephthalate resin material

Because the PBT resin material per se may be the same as described in [1] (1) above, its explanation will be omitted.

### (2) Inflation method

Fig. 18 shows the steps of a method for producing a PBT film by the inflation method. A tubular film extruded from an annular die 201 mounted to an extruder 212 is gradually inflated to a film of the predetermined width with the air introduced thereinto, taken off by nip rolls 213, and wound around a reel 214.

To produce the PBT film, the PBT resin and desired additives, etc. are blended at a resin temperature of 240 to 260°C. When the blending temperature is higher than 260°C, the thermal degradation of the resin is likely to proceed. Thus, when the blending is carried out in an extruder such as a double-screw extruder, the extruder should have a screw structure causing no heat generation, or should be provided with a proper cooling means. Incidentally, when the lower limit of the blending temperature becomes lower than 240°, the extrusion rate becomes unpreferably unstable.

The temperature of the resin extruded from the annular inflation die 201 is 210 to 250°C. When the temperature of the resin extruded from the annular die 201 exceeds 250°C, the bubble 207 cannot sufficiently be cooled by the first cooling ring 202. The temperature of the resin extruded from the annular die 201 is preferably 220 to 230°C. The pressure of the resin extruded from the annular inflation die 201 is 9.8 to 13.7 MPa (100 to 140 kgf/cm²). The resin-extruding pressure is preferably 9.8 to 11.8 MPa (100 to 120 kgf/cm²). The diameter of the annular inflation die 201 is preferably 120 to 300 mm.

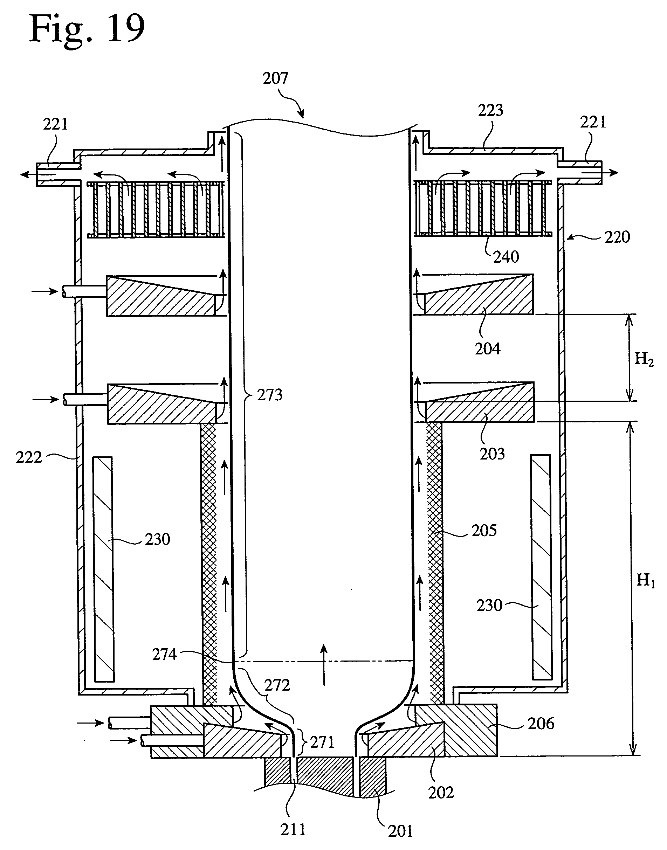

The bubble 207 extruded from the annular die 201 is oriented in both MD and TD while being cooled by the cooling means. This is schematically shown in Fig. 19.

In Fig. 19, the bubble cooling means comprises a first cooling ring 202 disposed near the annular die 201, a second cooling ring 203 disposed above the first cooling ring 202, a third cooling ring 204 disposed slightly above the second cooling ring 203, a cylindrical net 205 disposed between the first cooling ring 202 and the second cooling ring 203, and a cooling-air-ejecting means 206 disposed under the net 205.

In the apparatus having the above structure, because the arrangement of each cooling ring is determined by the temperature control to of the bubble 207 formed by an air-cooled inflation method, the shape and temperature distribution of the bubble 207 will be described below.

A molten PBT resin or a molten PBT resin composition is extruded from the annular orifice 211 of the die 201 to form the bubble 207. However, the bubble 207 immediately after extrusion has a small-diameter portion, the so-called neck portion 271, because of a low melt tension. The bubble 207 is oriented mainly in MD in the neck portion 271. The bubble 207 is then rapidly expanded to a predetermined bubble diameter. In this expanding portion 272, the bubble 207 is oriented not only in MD but also in TD. The PBT resin composition is solidified at a frost line 274 slightly above the expanding portion 272. The bubble 207 is further cooled by the second and third cooling rings 203, 204 disposed in the bubble region 273 above the frost line 274.

To obtain the PBT film by such air-cooled inflation method, the temperature of each portion of the bubble 207 is controlled as follows:
(a) 170°C or lower immediately after extruded from the annular die 201.
(b) Cooled to 130°C or lower by the neck portion 271.
(c) Cooled to100°C or lower by the frost line 274.
(d) Cooled to 80°C or lower by the second cooling ring 203.

The condition (a) is as described above. With respect to the condition (b), unless the bubble is cooled to 130°C or lower in the neck portion 271, sufficient orientation in TD cannot be achieved in the next expanding portion 272. In other words, the bubble does not have a sufficient melt tension in the expanding portion 272 unless it is cooled to 130°C or lower in the neck portion 271, resulting in the orientation predominantly in MD.

To meet such temperature condition, the blow-up ratio is 1.5 to 2.8, preferably 2.0 to 2.8.

With respect to the condition (c), the cold orientation of the bubble 207 can be achieved by lowering the bubble temperature to 100°C or lower at the frost line 274. If the bubble temperature is higher than 100°C at the frost line 274, the orientation of the bubble 207 is insufficient in both MD and TD in the expanding portion 272.

With respect to the condition (d), the formation of a uniform, thin bubble 207 can be stabilized by cooling the bubble 207 to 80°C or lower above the frost line 274. If the temperature of the bubble 207 is kept higher than 80°C above the frost line 274 without the second cooling ring 203, non-uniform orientation is likely to occur, making the entire bubble 207 unstable.

As the condition (e), the bubble is preferably cooled to 50°C or lower by the third cooling ring 204 after cooling by the second cooling ring. If the bubble 207 were completely cooled only by the second cooling ring 203, non-uniform cooling would be likely to occur. The bubble 207 is preferably cooled to 30 to 40°C by the third cooling ring 204. These second and third cooling rings 203, 204 do not cause orientation in the bubble 207 thereabove.

To conduct the above temperature control to of the bubble 207, arrangement of the first cooling ring 202, the second cooling ring 203, the third cooling ring 204, the net 205 and the cooling-air-ejecting means 206 is as follows:

### (A) First cooling ring 202

It is disposed just near the annular die 201 to eject a cooling air to cool the neck portion 271 to 130°C. Thus, the temperature of the bubble 207 becomes 100°C or lower at the frost line 274 downstream of the expanding portion 272.

### (B) Second cooling ring 203

It is disposed above the annular die 201 by the distance H₁ 5 to 10 times the opening diameter of the annular die 201, to eject a cooling air to make the temperature of the bubble 207 80°C or lower.

### (C) Third cooling ring 204

It is disposed above the second cooling ring 203 by the distance H₂ 0.5 to 5.0 times the opening diameter of the annular die 201, to eject a cooling air to make the temperature of the bubble 207 50°C or lower.

### (D) Net 205

The net 205 having a cylindrical shape is positioned between the first cooling ring 202 and the second cooling ring 203, such that it surrounds the bubble 207. The net 205 is cooled by a cooling-air-ejecting means 206 described below, and the cooling of the net 205 by the first and second cooling rings 202, 203 is carried out always under the same conditions without being influenced by the ambient environment (air temperature, etc.), whereby the temperature around the bubble 207 is kept uniform such that the temperature of the bubble 207 meets the above-described conditions (b) to (d).

### (E) Cooling-air-blowing apparatus 206

It is disposed outside and below the net 205, and has a circular cooling-air-blowing orifice along the lower end of the net 205, to eject a cooling air slantingly upward such that the temperature around the net 205 is stable in a range of 30 to 40°C, preferably 30 to 35°C. The cooling air blown slantingly upward goes upward along the net 205 to cool the entire net (shown by the arrow in Fig. 19).

In the above method, the cooling air ejected from the first cooling ring 202 onto the bubble 207 is preferably a humid air. The humid air, which is humidified and cooled by cold water, contains moisture substantially in a saturated state, having larger cooling effects than a simple cooling air by about 5°C. As the cooling air ejected from the second and third cooling rings 203, 204 onto the bubble 207, it is also preferable to use the humid air from the aspect of cooling efficiency. Because the bubble 207 would be unstable without stable cooling effects, the temperature and humidity of the cooling air are controlled as constant as possible.

The cooling air ejected from the cooling-air-ejecting means 206 onto the net 205 may be a humid air, or usually an air in the room adjusted to the desired temperature, as in the case of cooling by the first to third cooling rings 202-204.

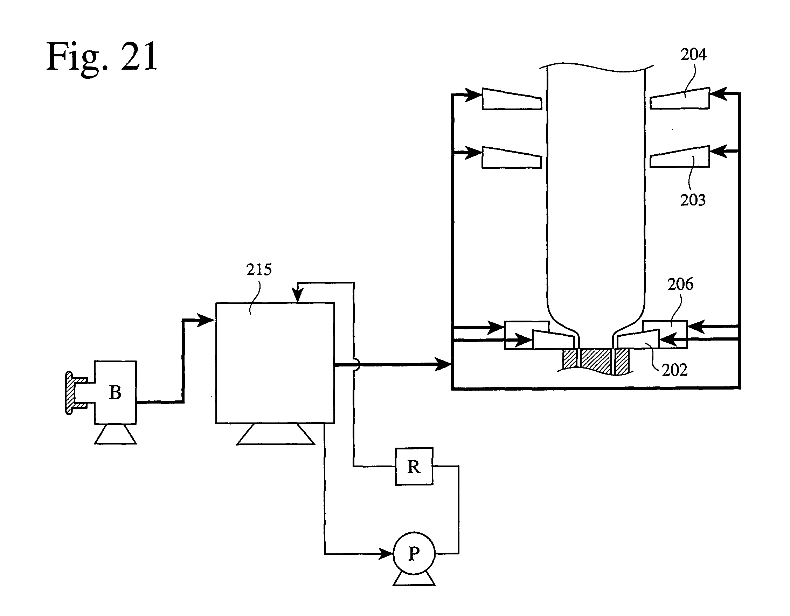

Fig. 21 shows a system for supplying a humid air. The supplied air from a blower B is humidified and cooled by a humidifier 15 comprising a water cooler R and a cold-water-recycling pump P, and supplied to the first to third cooling rings 202 to 204 and the cooling-air-ejecting means 206.

The net 205 may be made of plastics such as nylon, polypropylene, polyesters, etc., or metals such as stainless steel, copper, brass, nickel, etc., preferably with 5 to 20 mesh, particularly 8 to 10 mesh.

As shown in Fig. 19, a partition 220 may be disposed around the net 205, such that it surrounds the bubble region 273. Because the partition 220 can isolate the bubble region 273 from the influence of an ambient atmosphere (temperature, etc.), the cooling of the bubble by the first cooling ring 202, the second cooling ring 203, the third cooling ring 204 and the cooling-air-ejecting means 206 can be conducted always under the same conditions, whereby the temperature around the bubble 207 can be kept uniform such that the temperature of the bubble 207 meets the above conditions (b) to (d).

Though not particularly restrictive, the materials of the partition 220 are preferably acrylic resins such that the bubble region 273 surrounded by the partition 220 can be inspected. As long as it surrounds the bubble region 273, the shape of the partition 220 is not particularly restricted. For instance, it may have a cylindrical or rectangular structure, and preferably a cylindrical structure.

If necessary, a heating means 230 may be disposed inside the partition 220. The heating means 230 may be, for instance, an electric heater in a rod or ribbon shape. Pluralities of rod-shaped electric heaters are preferably disposed. An aluminum foil may be attached to the inner surface of the partition 220 to shut heat radiation. If necessary, a means for blowing up a cold air at about room temperature may be disposed under the partition 220 (immediately above the cooling-air-ejecting means 206). This makes it easy to control the temperature and the flow rate of the air inside the partition 220.

As shown in Fig. 19, cooling air exits 221 are preferably disposed above the partition 220. The cooling air exits 221 can rectify the cooling air ejected from the first cooling ring 202, the second cooling ring 203, the third cooling ring 204 and the cooling-air-ejecting means 206, thereby preventing the cooling air from laterally vibrating the bubble 207. The number of the cooling air exits 230 is preferably 2 or more, more preferably 2 to 4. Though the cooling air exits 221 are disposed in an upper portion of the side surface 222 of the partition 220 in the embodiment shown in Fig. 19, they may be disposed on the upper surface 223 of the partition 220. The number and opening diameter of the cooling air exits 221 are determined to such an extent that the temperature-keeping function of the partition 220 is not deteriorated.

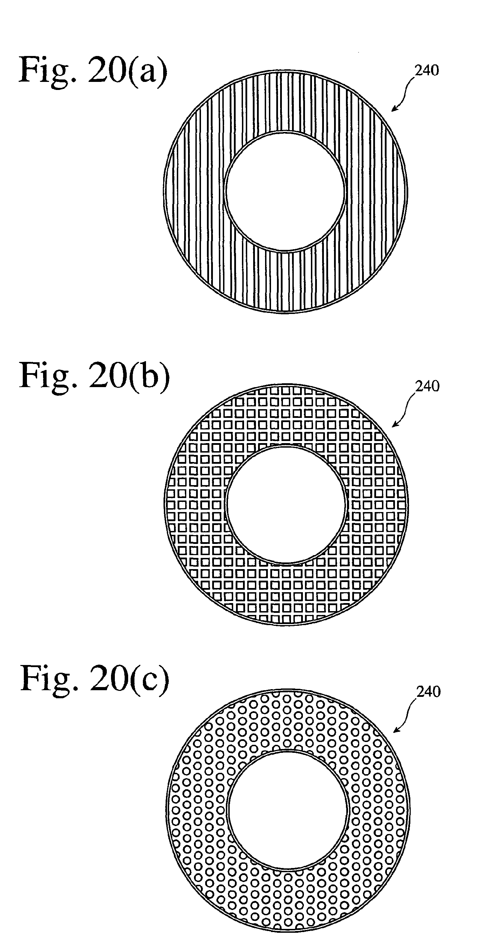

As shown in Fig. 19, a ring-shaped rectifying plate 240 is preferably disposed inside the partition 220 in an upper portion. The rectifying plate 240 can further rectify the cooling air ejected from the first cooling ring 202, the second cooling ring 203, the third cooling ring 204 and the cooling-air-ejecting means 206, thereby further improving the lateral vibration of the bubble 207. As shown in Fig. 19, the rectifying plate 240 preferably extends substantially from the cylindrical net 205 to the inner surface of the partition 220. Though not particularly restrictive, the rectifying plate 220 may have a structure comprising partition plates arranged in one direction as shown in Figs. 19 and 20(a), a structure having a lattice partition as shown in Fig. 20(b), a structure having a plate punched to have a lot of round holes as shown in Fig. 20(c), a net structure, etc. The opening ratio of the rectifying plate 240 is preferably 40 to 60%. Though not particularly restrictive, the material of the rectifying plate 240 may be aluminum, synthetic resins, etc. The number of the rectifying plates 240 is not particularly restricted, but it may be usually one.

The production of a PBT resin film by an inflation method can meet the above requirements, and other conditions may be those generally used in the inflation method. Namely, a molten tubular PBT resin is continuously extruded from a crosshead die upward or downward with its thickness prevented from being uneven by rotating the die in one or other direction, inflated with the air introduced thereinto to a predetermined size with its end pinched by rolls, and taken off by winding.

The thermal shrinkage ratio of the PBT film thus produced is substantially 0% at temperatures up to 200°C, with substantially no thermal shrinkage at temperatures up to 200°C. Accordingly, the film size does not change at any secondary working steps such as heat sealing, printing, etc. The orientation of the film can be conducted with or without heating. For instance, it can be easily orientated to about 3.2 times at about 130°C to obtain a milky-white to translucent orientated film. The film orientated without heating is transparent. The above-described production method provides the PBT film having a thickness of 10 µm or more and a width of 400 to 1200 mm.

Because each portion of the bubble, such as a portion immediately after extrusion, a neck portion, an inflated portion, a frost line, etc. is always kept at the desired temperature by the above-described production method, the resultant film always has a uniform quality. In addition, because the cooling speed can be increased, the film can be formed at a high speed.

### (3) Monoaxial orientating method

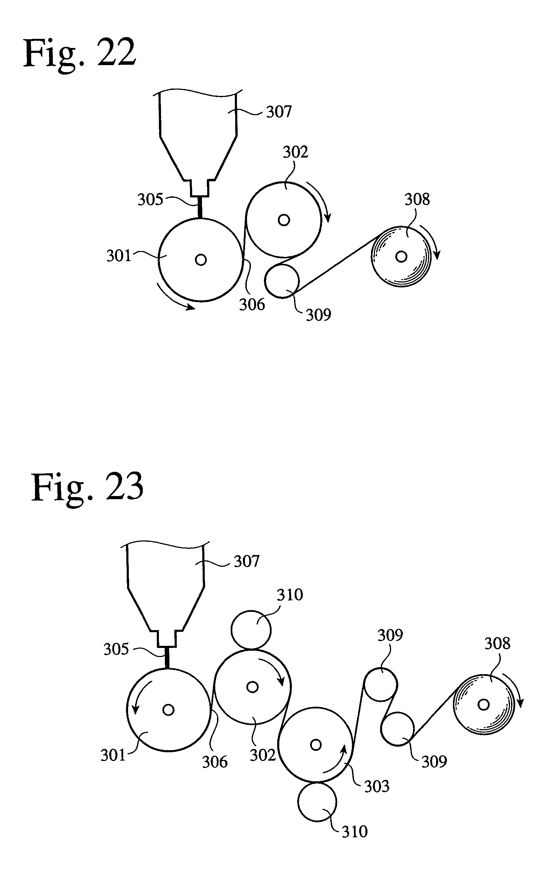

Fig. 22 shows the production process of the PBT film by a monoaxial orientating method. A molten resin 305 extruded from a sheet-forming die (T die) 307 is brought into contact with a thermal casting roll 301, by which it is slowly cooled to form a crystallized sheet 306. The resultant crystallized sheet 306 is oriented between the thermal casting roll 301 and a second roll 302 disposed in parallel with the roll 301 to provide an orientated film.

### (a) Step of forming crystallized sheet

The PBT resin is melt-blended with additives, other resins, etc. described in [1] (1) above, to produce a molten resin 305. Though not particularly restrictive, the melt blending method is usually carried out by uniformly blending in a double-screw extruder. The blending temperature is preferably 230 to 260°C. When the blending temperature is higher than 260°C, the thermal deterioration of the resin is likely to occur. Thus, when the blending is carried out in an extruder such as a double-screw extruder, the extruder having a screw structure generating no heat, or that having a proper cooling means is used. Incidentally, when the lower limit of the blending temperature is lower than 230°C, the extrusion rate is undesirably unstable.

The melt-blended resin 305 is extruded from the sheet-forming die 307 directly or via another extruder, or via an extruder after pelletized by cooling. The sheet-forming die 307 usually has a gap of 5 mm or less. The temperature of the resin extruded from the sheet-forming die 307 is preferably 210 to 250°C, more preferably 220 to 230°C.

Thus, the molten resin 305 extruded from the sheet-forming die 307 is slowly cooled on the thermal casting roll 301 to form a crystallized sheet 306. The crystallized sheet 306 is easily stretched to a thin, high-orientation film. In order that the extruded resin 305 is not cooled to 200°C or lower before contact with the thermal casting roll 301, the distance between the sheet-forming die 307 and the thermal casting roll 301 is preferably 20 cm or less. The temperature of the thermal casting roll 301 is preferably controlled to 150 to 200°C. When the temperature of the thermal casting roll 301 is higher than 200°C, the extruded resin 305 has a low melt tension, resulting in difficulty in the formation of the crystallized sheet 306. On the other hand, when the temperature of the thermal casting roll 301 is lower than 150°C, the resultant crystallized sheet 306 has low crystallinity, it is not easily stretched in subsequent steps.

The thickness of the crystallized sheet 306 is preferably 50 to 100 µm to easily stretch the sheet 306 in subsequent steps. To suppress a neck-in phenomenon, by which a sheet extruded from the die and cast becomes narrower than the effective width of the die, from occurring during the formation of the crystallized sheet 306 having a thickness of 50 to 100 µm as much as possible, the peripheral speed of the thermal casting roll 301 is determined as 5 to 15 m/minute. The outer diameter of the thermal casting roll 1 is preferably 35 to 70 cm.

### (b) Orientation step

### (i) Primary orientation (stretching)

As shown in Fig. 22, the resultant crystallized sheet 306 is stretched in a machine direction between the thermal casting roll 301 and the second roll 302 by utilizing the difference in a peripheral speed between both rolls (primary stretching). It is preferable at this time that the temperature of the thermal casting roll 301 is controlled to 150 to 200°C as described in (a) above, and that the distance between the thermal casting roll 301 and the second roll 302 (distance between the common tangent line of both rolls) is 10 cm or less. The primary stretching under such conditions can make relatively narrower a region (orientation region), in which the crystallized sheet 306 is oriented, and set the temperature of the orientation region at 130 to 150°C. Because the temperature of the orientation region at 130 to 150°C can make the melt tension suitable for orientation to a relatively high extent, uniform orientation can be achieved with little unevenness in the film thickness. As the orientation region becomes narrower, the neck-in phenomenon is more suppressed. To keep the temperature of the orientation region constant, the film may be heated between both rolls by using a radiation heater, etc. In Fig. 22, 309 represents a guide roll, and 308 represents a winding reel.

The orientation is preferably 1.5 times or more, more preferably 2 to 4 times, though variable depending on the thickness of the crystallized sheet 306. The larger the orientation, the higher the transparency of the stretched film. With a proper peripheral speed ratio of the thermal casting roll 301 to the second roll 302, crystallized sheet 306 can be stretched to the desired extent. Though not particularly restrictive, the outer diameter of the second roll 302 may be 35 to 70 cm, like the thermal casting roll 301.

When reorientation (secondary stretching) is conducted after the primary stretching as described below, the temperature of the second roll 302 is preferably controlled to 100 to 150°C. On the other hand, when the orientation step consists of the primary stretching only, a cooling-fixing treatment can be conducted on the primarily stretched film by controlling the temperature of the second roll 302 to 40°C or lower. The cooling-fixing treatment herein means a treatment of the film at a temperature equal to or lower than the Tg of PBT (20 to 45°C). The cooling-fixing treatment stabilizes the stretched state of the film. What is necessary to make the cooling-fixing treatment longer is to bring the primarily stretched film into contact with a third roll 303 disposed in parallel with the second roll 302 as shown in Fig. 23 and rotating at the same peripheral speed as that of the second roll 302 with the temperature of the third roll 303 controlled to 40°C or lower. In Fig. 23, the same reference numerals are assigned to the same parts as those of the production apparatus shown in Fig. 22. The outer diameter of the third roll 303 may be 35 to 70 cm, like the second roll 302. In Fig. 23, 310 represents a nip roll.

When the cooling-fixing treatment is conducted by the third roll 303, the temperature of the second roll 302 may be controlled between a temperature higher than the Tg of PBT and a temperature of (the melting point of PBT - 50°C), to further reduce the thermal shrinkage ratio of the film.

### (ii) Secondary stretching

The primarily orientated film is preferably further stretched in a machine direction (secondary stretching). The secondary stretching further provides the film with improved transparency and a smaller thickness. The secondary stretching is conducted in a machine direction by a peripheral speed difference between the second roll 302 and the third roll 303 shown in Fig. 23. In this case, the temperature of the second roll 302 is preferably controlled to 100 to 150°C, and the distance between the second roll 302 and the third roll 303 is preferably 10 cm or less. The distance of 10 cm or less can suppress the neck-in phenomenon as described in (i) above.

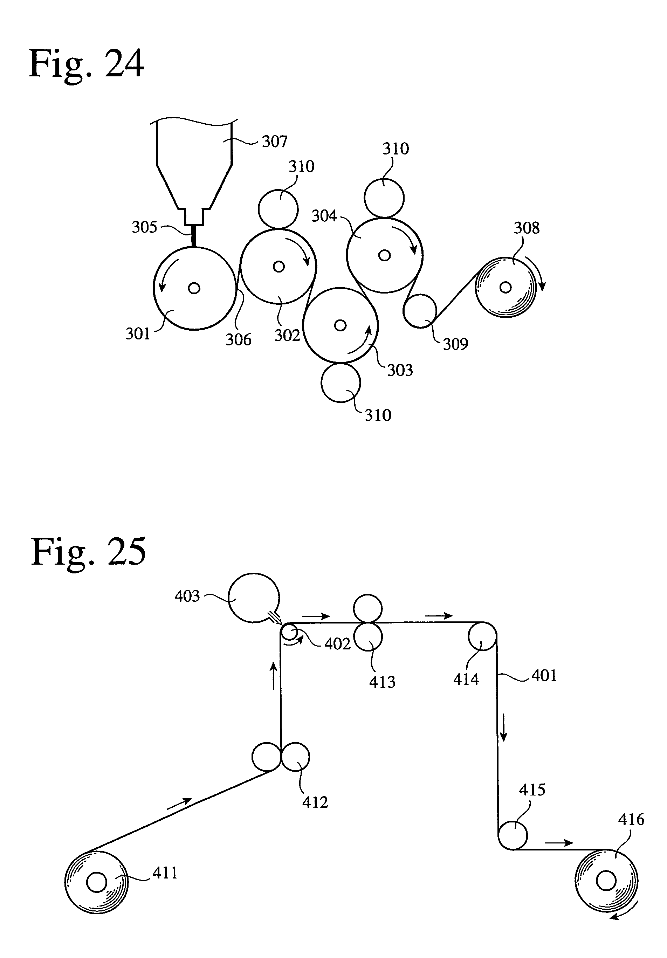

When orientation (tertiary stretching) described below is conducted again after the secondary stretching, the temperature of the third roll 303 is preferably controlled to 40 to 100°C. On the other hand, when no tertiary stretching is conducted, the secondarily stretched film can be subjected to a cooling-fixing treatment by controlling the temperature of the third roll 303 to 40°C or lower. When the cooling-fixing treatment is conducted for a longer period of time, the secondarily stretched film is brought into contact with a fourth roll 304 disposed in parallel with the third roll 303 as shown in Fig. 24, which is controlled to a temperature of 40°C or lower and rotated at the same peripheral speed as that of the third roll 303. In Fig. 24, the same reference numerals are assigned to the same parts as in the production apparatus shown in Fig. 22. The outer diameter of the fourth roll 304 may be 35 to 70 cm, the same as that of the third roll 303.

When the cooling-fixing treatment is conducted by the fourth roll 304, the temperature of the third roll 303 may be controlled to a temperature higher than the Tg of PBT and the melting point of PBT - 50°C or lower, to further decrease the thermal shrinkage ratio of the film.

### (iii) Tertiary stretching

The secondarily stretched film may be further oriented in a machine direction (tertiary stretching). When the tertiary stretching is conducted, the secondarily stretched film is stretched in a machine direction by a peripheral speed difference between the third roll 303 and the fourth roll 304 shown in Fig. 24. In this case, it is preferable for the same reason as described in (i) above that the temperature of the third roll 303 is controlled to 40 to 100°C, and that the distance between the third roll 303 and the fourth roll 304 is 10 cm or less. The transparency of the film can be further improved by such cold stretching. The fourth roll 304 is preferably controlled to a temperature of 40°C or lower, so that the tertiarily stretched film can be subjected to a cooling-fixing treatment.

### (iv) Lateral orientation

The PBT film produced by any one of the above methods (i) to (iii) may subsequently be subjected to lateral orientation in TD (width direction). The lateral orientation may be conducted by known methods such as a tentering method, etc.

### (v) Heat treatment

Though the PBT film thus produced has excellent dimensional stability, it may further be subjected to a heat treatment to improve its thermal shrinkage ratio. The heat treatment may be conducted by a heat-fixing treatment method or a heat shrinkage treatment method. These heat treatments are preferably conducted at a temperature higher than the Tg of PBT and the melting point of PBT - 50°C or lower.

The heat-fixing treatment is conducted by a tentering method, a rolling method or a compression method. The heat shrinkage treatment may be conducted by a tentering method, a rolling method or a compression method, using a belt conveyor or floating. The heat-fixing treatment and the heat shrinkage treatment may be combined.

The PBT film thus produced is translucent or transparent, with higher uniformity of thickness and a lower thermal shrinkage ratio than those of the conventional monoaxially orientated film. Specifically, the film having an average thickness of 8 to 20 µm has a thickness difference of 1 to 2 µm, and a thermal shrinkage ratio of 0.1 % or less in MD (machine direction) and 0.2% or less in TD (width direction). The thickness difference is a difference between the maximum thickness and the minimum thickness among those measured on the PBT film at six points in total in a width direction in a center portion and both end portions (two points each). The smaller difference means good results. The thermal shrinkage ratio was measured on the PBT film exposed to 150°C for 10 minutes in both MD and TD. Because of such uniformity, it is possible to form a print layer and a vapor-deposited metal layer with little unevenness, with little variation in a film size in the secondary working such as heat sealing, printing, etc.

Because the thermal casting roll and the first to fourth rolls are always kept at the desired temperatures in the production method described above, the resultant film always has uniform quality. In addition, because a cooling step is not inserted into the production of the unoriented film, high-speed film formation can be achieved.

### [7] Formation of linear scratches on film

To impart the easy-to-straight-tear characteristics to the shape-memory PBT laminate film, at least one of the PBT film, the rigid film and the sealant film is preferably provided with a lot of substantially parallel linear scratches formed by the method described below on the entire surface. Such linear scratches make it possible to easily tear the shape-memory PBT laminate film straight. Accordingly, when the shape-memory PBT laminate film is used as package sheets for lids for instant food containers, for instance, the lids can be partially opened. Such linear scratches are preferably formed particularly on the PBT film. The linear scratches can be formed by bringing a continuously running film into contact with a means having a lot of fine projections for forming linear-scratches. The method for forming linear scratches will be explained below in detail referring to the drawings.

### (1) Formation of linear scratches on film in progressing direction

Fig. 25 shows one example of an apparatus for forming linear scratches on the film 401 in a progressing direction. Fig. 25 shows an example, in which a roll 402 having a lot of fine projections on the surface (hereinafter referred to as "pattern roll") is used as a means for forming linear scratches, and a nozzle 403 capable of blowing air is used as a film-pressing means. A film 401 unwound from a reel 411 having an original film passes between nip rolls 412 and is brought into contact with a pattern roll 402 to be provided with linear scratches. The resultant film having easy-to-straight-tear characteristics passes through nip rolls 413 and guide rolls 414 and 415, and is then wound around a winding reel 416.

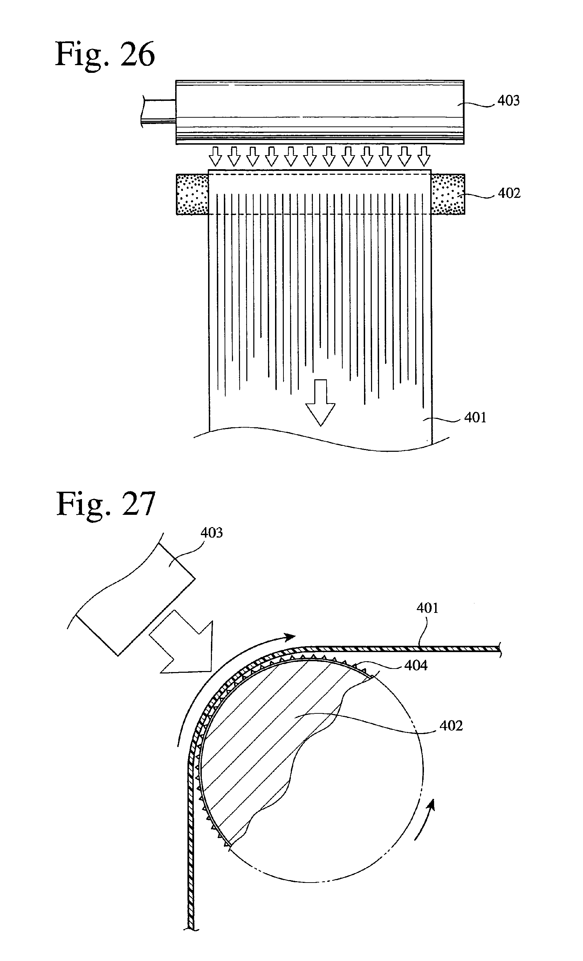

As shown in Fig. 26, the pattern roll 402 is fixed with its rotation axis in parallel with the width direction of the film 401, and has a longer longitudinal length than the width of the film 401, such that the film 401 is in sliding contact with the pattern roll over the entire width.

The nip rolls 412 and 413 disposed upstream and downstream of the pattern roll 402 as the tension-controlling rolls give a tension to the film 401 moving over the pattern roll 402. Further as shown in Fig. 26, the air at a predetermined pressure is blown from a nozzle 403 disposed on the opposite side of the pattern roll 402 onto the film 401 in sliding contact with the pattern roll 402, so that the film 401 is brought into contact with the sliding surface of the pattern roll 402 at a uniform force. Thus, uniform linear scratches are formed on the surface of the film. Using the nozzle 403, the film 401 is pressed onto the pattern roll 402, such that non-uniformity in contact on the roll-sliding surface due to the uneven thickness of the film 401 can be suppressed.

Because the pattern roll 402 has a lower peripheral speed than the progressing speed of the film 401, it is preferable to rotate the pattern roll 402 in an opposite direction to the progressing direction of the film 401. This can prevent wrinkles from being generated on the film and dust generated by the formation of linear scratches from remaining on the surface of the pattern roll 402, thereby forming linear scratches of proper length and depth. In the present invention, the progressing speed of the film 401 is preferably 10 to 500 m/minute. The peripheral speed of the pattern roll 402 (rotation speed in an opposite direction to the progressing direction of the film 401) is preferably 1 to 50 m/minute.

Usable as the pattern roll 402 is, for instance, that described in JP 2002-59487 A. This has a structure having a lot of fine particles having Mohs' hardness of 5 or more attached to the surface of a metal roll by an electrodeposition method or by an organic or inorganic binder. The metal roll is made of iron, iron alloys, etc. The metal roll preferably has a plating layer of nickel or chromium. The fine particles having Mohs' hardness of 5 or more are, for instance, cemented carbide particles such as tungsten carbide, silicon carbide particles, boron carbide particles, sapphire particles, cubic boron nitride (CBN) particles, natural or fine synthetic diamond particles, etc. Fine synthetic diamond particles having large hardness and strength are particularly desirable. The particle size of the fine particles is properly determined depending on the depth and width of linear scratches formed. In the present invention, the fine particles desirably have a particle size of 10 to 100 µm with unevenness of 5% or less. How many fine particles are attached to the roll surface is properly selected such that the formed linear scratches have desired intervals. To form uniform linear scratches, the fine particles are preferably attached to 50% or more of the roll surface. A specific example of the pattern roll 402 may be a pattern roll having a lot of fine synthetic diamond particles fixed with a nickel electrodeposition layer to the surface of an iron roll at an area ratio of 50% or more. The outer diameter of the pattern roll 402 is preferably 2 to 20 cm, more preferably 3 to 10 cm.

The pattern roll 402 may also be a needle roll having metal needles embedded in the surface of a metal roll regularly in a lattice pattern with extremely small intervals. In addition to the pattern roll 402, the means for forming linear scratches may be a pattern plate having many fine particles having Mohs' hardness of 5 or more as described above on the surface of a plate body.

Fig. 27 shows that the film 401 is in sliding contact with the pattern roll 402 to form linear scratches. For instance, an edge of at least one fine particle 404 on the surface of the pattern roll 402 bites the roll-sliding surface, one long linear scratch is formed until the edge of the biting fine particle 404 separates from the roll-sliding surface, because the progressing speed of the film 401 is larger than the peripheral speed of the pattern roll 402 in an opposite direction as described above.

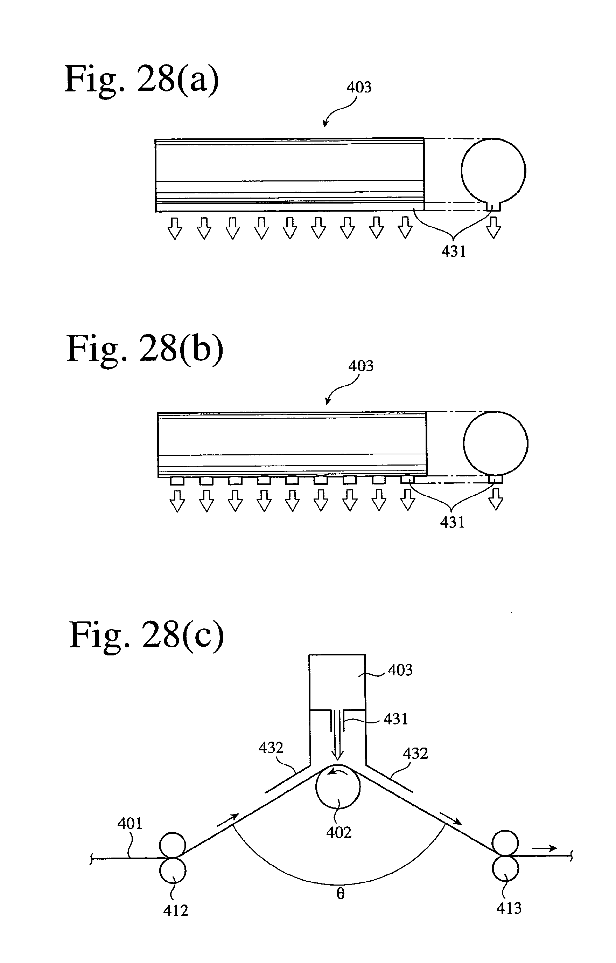

Usable in place of a nozzle having a strip-shaped blowing orifice 431 (the same as shown in Figs. 25 to 26) shown in Fig. 28(a) as the air-blowing means, a nozzle having pluralities of blowing orifices 431 shown in Fig. 28(b) may be used. In addition, when a compressed air is blown from a nozzle having a hood 432 covering the pattern roll 402 as shown in Fig. 28(c), the compressed air ejected from the blowing orifice 431 is not easily diffused until it reaches a position at which the film 401 is in sliding contact with the pattern roll 402, so that the contact force of the film 401 to the pattern roll 402 becomes further uniform on the roll-sliding surface. The pressure of the compressed air flow blown from such air-blowing means is preferably 4.9 to 490 kPa (0.05 to 5 kgf/cm²), so that the contact force of the film 401 to the pattern roll 402 becomes uniform on the roll-sliding surface. The more preferred pressure of the compressed air flow is 9.8 to 196 kPa (0.1 to 2 kgf/cm²). The distance from the blowing orifice 431 to the roll-sliding surface is preferably 10 to 50 cm. The compressed air needs only uniformly impinge onto a region covering at least a surface of the roll. However, if the blowing orifice 431 of the blower or the nozzle were larger than necessary, a too much amount of the compressed air is unpreferably needed to obtain a proper gas pressure.

The winding of the film 401 around the fixed pattern roll 402 is preferably conducted such that an angle θ between the winding direction of the film 401 and the unwinding direction of the film 401 is in a range of 60° to 170° as shown in Fig. 28(c). This makes the length and depth of linear scratches easily adjustable. The angle θ is preferably in a range of 90° to 150°. To set the angle θ at the desired value, the height position of the pattern roll 402 may be changed such that the positional relation of the pattern roll 402 to the nip rolls 412 and 413 are properly adjusted. Depending on how to wind the film 401 around the pattern roll 402 and the outer diameter of the pattern roll 402, a tension given to the film 401 by the nip rolls 412 and 413 and the pressure of the gas ejected from the nozzle 403 may be properly adjusted to obtain linear scratches with the desired length and depth. In the present invention, a tension (tension per width) given to the film by the nip rolls 412 and 413 is preferably in a range of 0.01 to 5 kgf/cm width.

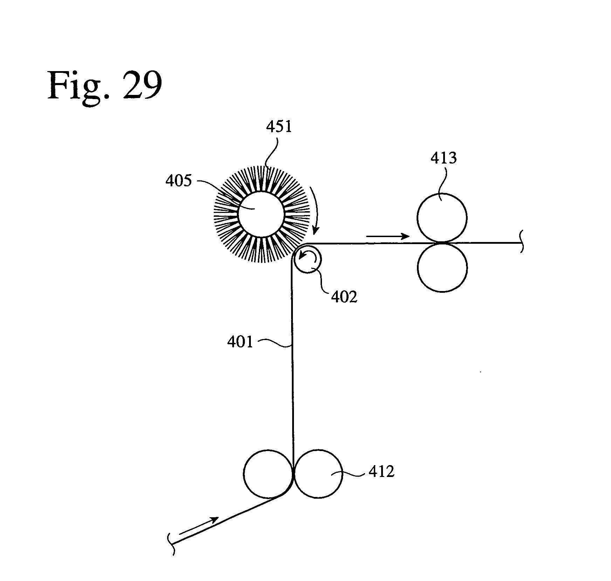

In place of the air-blowing means, a brush may be brought into sliding contact with the opposite side of the roll-sliding surface, to give a uniform contact force to the roll-sliding surface. The brush hairs are preferably movable on a sliding surface of the brush on the film 401 (hereinafter referred to as "brush-sliding surface" unless otherwise described), at a lower speed than the progressing speed of the film 401 in an opposite direction to the progressing direction of the film 401. Thus, as shown in Fig. 29, the brush is preferably a rotatable roll brush 405 having a lot of hairs radially extending from a brush shaft (rotation shaft), the brush shaft being fixed in parallel with the width direction of the film 401 and having a larger longitudinal length than the width of the film 401, such that the brush is in sliding contact with the film 401 in its entire width.

The outer diameter of the rotatable roll brush 405 is preferably 5 to 10 cm. The hairs 451 of the rotatable roll brush 405 preferably has a bending recovery ratio of 70% or more, a diameter of 0.1 to 1.8 mm, and a length of 1 to 5 cm. The hairs 451 of the rotatable roll brush 405 have a density of 100 to 500/cm² on the brush-sliding surface. The bending recovery ratio is determined as follows: First, two looped hair fibers having a length of about 26 cm are crossed like a chain with an upper loop fixed to a hook, and a load (g) as heavy as half of the denier of the hair fiber is applied to a lower loop for 3 minutes, and a sample having a length of about 3 cm is cut out of a pair of loops bent like pine leaves, and left to stand for 60 minutes. An open angle (θ₄) of the sample is measured to calculate the bending recovery ratio by the equation of (θ₄/180) x 100 (%). Though not particularly restrictive, the tip end of the hairs 451 is preferably substantially in a U-shape or in a tapered shape. The materials of the hairs 451 are preferably synthetic resins such as polypropylene, nylon, acrylic resins, polyethylene, etc., though not particularly restrictive.

The rotatable roll brush 405 is preferably in sliding contact with the film 401 at a pressure of 1 to 490 kPa (0.01 to 5 kgf/cm²) on the brush-sliding surface. The peripheral speed of the rotatable roll brush 405 (rotation speed in an opposite direction to the progressing direction of the film 401) is preferably 1 to 50 m/minute.

The length and depth of linear scratches are adjusted to obtain the desired level of the easy-to-straight-tear characteristics, by properly changing the moving speed of the film 401, the peripheral speed of the pattern roll 402, the size of the fine diamond particles 404, the outer diameter of the pattern roll, the gas pressure from the nozzle 403, the pressure of the rotatable roll brush 405, a tension given to the nip rolls 412 and 413, etc.

### (2) Formation of slanting linear scratches on film

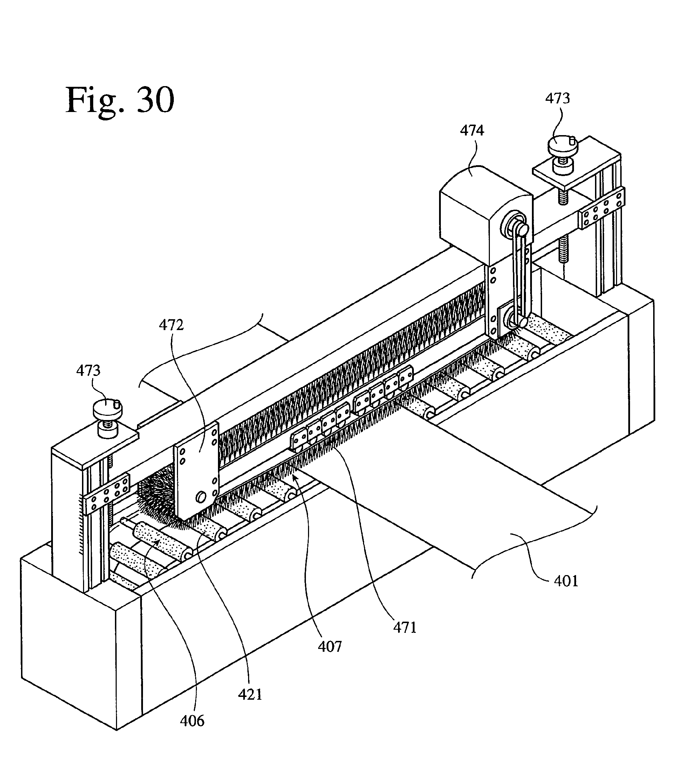

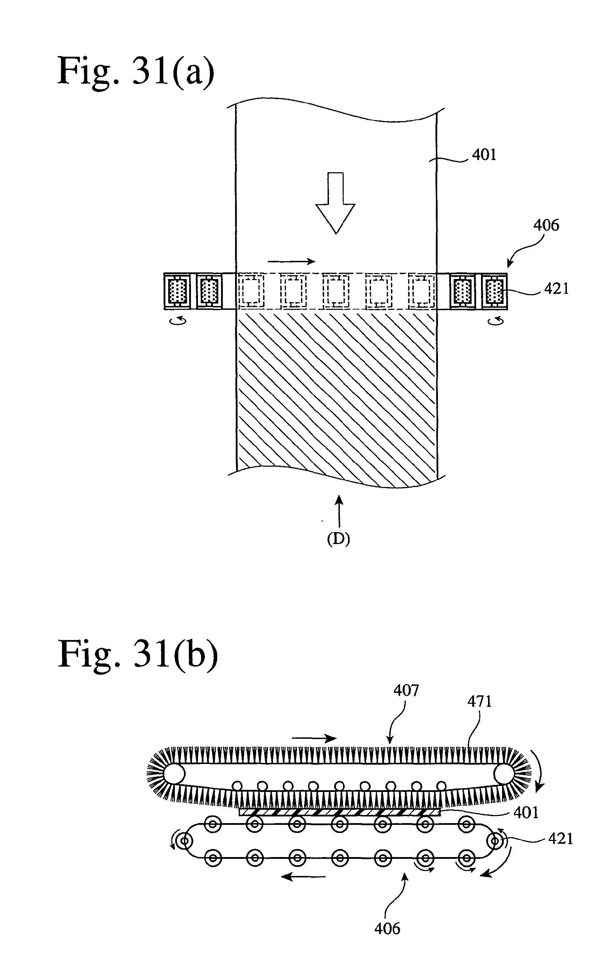

Fig. 30 shows one example of an apparatus for forming the linear scratches on the film 401 slantingly to the progressing direction of the film 401. The same reference numerals are assigned to the same members or portions as in Fig. 25. The apparatus shown in Fig. 30 comprises an endless pattern belt 406 comprising a lot of small pattern rolls 421 connected to each other as a means for forming linear scratches, and an endless brush 407 comprising a lot of hairs 471 implanted to an endless belt as a film-pressing means. Fig. 31(a) is a partial enlarged plan view showing the endless pattern belt 406 rotating in the width direction of the film 401 in the apparatus shown in Fig. 30, and Fig. 31(b) is a schematic cross-sectional view taken from the direction D in Fig. 31 (a).

The endless pattern belt 406 is rotated in the width direction of the film 401 as shown in Figs. 31(a) and 31(b), such that small pattern rolls 421 are in sliding contact with the continuous film 401 to form linear scratches on the film 401 slantingly to the progressing direction of the film 401. The endless pattern belt 406 is preferably constituted by a larger number of the pattern rolls 421 at a high density. The longitudinal length and outer diameter of each small pattern rolls 421 are both preferably 5 to 10 cm.

The angle of the slanting linear scratches to the progressing direction of the film can be changed by properly adjusting the peripheral speed of the endless pattern belt 406 and the speed of the film 401. The peripheral speed of the endless pattern belt 406 is usually 1 to 100 m/minute. Small pattern rolls 421 are rotated in an opposite direction to the progressing direction of the endless pattern belt 406 on the roll-sliding surface at a peripheral speed of 1 to 50 m/minute as in the case of the pattern roll 402 described in (1) above.

The endless brush 407 is preferably rotated, such that the direction of the hairs 471 moving in sliding contact with the film 401 is opposite to the direction of the endless pattern belt 406 moving in sliding contact with the film 401. Thus, the endless brush 407 and the endless pattern belt 406 are rotated in the same direction. The hairs 471 of the endless brush 407 are preferably as long as 4 to 8 cm. The preferred requirements of the hairs 471 of the endless brush 407 concerning a bending recovery ratio, a diameter, a density on the brush-sliding surface, a tip shape and a material are the same as those of the rotatable roll brush 405 described in (1) above. The pressure of the endless brush 407 on the brush-sliding surface may be 1 to 490 kPa (0.01 to 5 kgf/cm²), the same as that of the rotatable roll brush 405 described in (1) above. The pressure for forcing the endless brush 407 to come into sliding contact with the film 401 may be controlled by properly adjusting the vertical position of the endless brush 407 by rotating a height-controlling knob 473. The peripheral speed of the endless brush 407 is preferably 1 to 50 m/minute. The peripheral speed of the endless brush 407 may be controlled by properly adjusting the rotation speed of a motor 474.

The endless pattern belt 406 and the endless brush 407 are preferably longer than the width of the film 401 in their progressing directions, such that the entire film 401 in the width direction are in sliding contact with the endless pattern belt 406 and the endless brush 407.

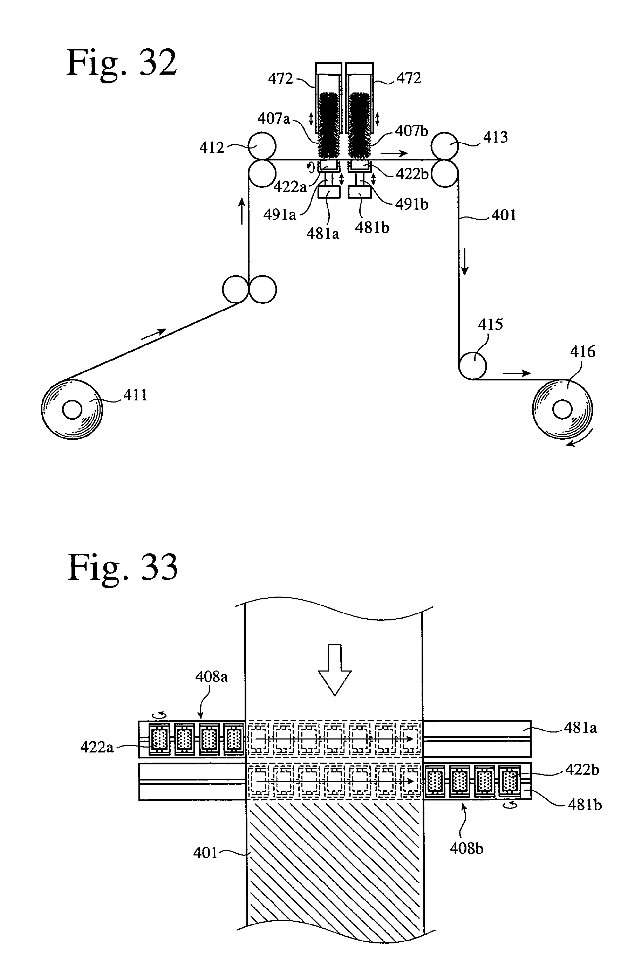

Fig. 32 shows another example of an apparatus for providing the film 401 with linear scratches slanting relative to the progressing direction. The same reference numerals are assigned to the same members or portions as in Fig. 25. The apparatus shown in Fig. 32 comprises a roll train 408a comprising a lot of small pattern rolls 422a mounted to a guide rail (support) 481a in parallel, and a roll train 408b comprising a lot of small pattern rolls 422b mounted to a guide rail (support) 481b in parallel, as means for forming linear scratches, as shown in Fig. 33.

Support shafts 491a and 491b supporting the pattern rolls 422a and 422b are movable up and down, and the roll trains 408a and 408b are movable straight along the guide rails 481a and 481b, respectively, in the width direction of the film 401. The guide means comprising the support shafts 491a and 491b movable up and down and the guide rails 481a and 481b can independently move the roll trains 408a and 408b in the width direction of the film 401. Accordingly, the roll trains 408a and 408b move from one end of the film 401 to the other end thereof in sliding contact with the film 401, and then separate from the film 401 and return to the original position, and this cycle is repeated. During this cycle, the movement of the roll trains 408a and 408b is controlled such that any of the roll trains is always in sliding contact with the entire width of the film 401, thereby forming linear scratches on the film slantingly to its progressing direction. As the guide means, instead of making the support shafts 491 a and 49 1 b not movable up and down relative to the guide rails 481a and 48 1 b, the guide rails 48 1 a and 481b may move up and down.

The longitudinal length and outer diameter of each pattern roll 422a, 422b may be about 5 to 10 cm. Intervals between the adjacent pattern rolls 422a, 422b are preferably narrower than at least the width of the pattern roll, such that the pattern rolls are disposed at a high density. Each roll train 408a, 408b is longer than the width of the film 401.

The apparatus shown in Fig. 32 comprises the same endless brushes 407a and 407b as those in the apparatus shown in Fig. 30 as film-pressing means, and the endless brushes 407a and 407b are opposing the roll trains 408a and 408b in parallel via the film 401. Support members 472, 472 supporting the endless brushes 407a and 407b are movable up and down. Accordingly, the vertical movement of the endless brush 407a is controlled such that both the endless brush 407a and the roll train 408a are brought into sliding contact with the film 401 simultaneously, and the vertical movement of the endless brush 407b is controlled such that both the endless brush 407b and the roll train 408b are brought into sliding contact with the film 401 simultaneously. Thus, a constant contact force is always applied to the roll-sliding surface.

The endless brushes 407a and 407b are preferably rotated such that the moving direction of their hairs in sliding contact with the film 401 is opposite to the moving direction of the roll trains 408a and 408b in sliding contact with the film 401. The preferred requirements of the hairs of the endless brushes 407a and 407b concerning a bending recovery ratio, a diameter, a length, a density on the brush-sliding surface, a tip shape and a material, and the preferred requirements of the endless brushes 407a and 407b concerning a pressure on the brush-sliding surface, and a peripheral speed may be the same as those of the endless brush 407 in the apparatus shown in Fig. 30.

The angle of the slanting linear scratches to the progressing direction of the film may be changed by properly adjusting the speed of the roll trains 408a and 408b in sliding contact with the film 401 and the moving speed of the film 401. The pattern rolls 422a and 422b are rotated in an opposite direction to the moving direction of the roll trains 408a and 408b on the roll-sliding surface. Their peripheral speed may be the same as that of the pattern rolls 402 described in (1) above.

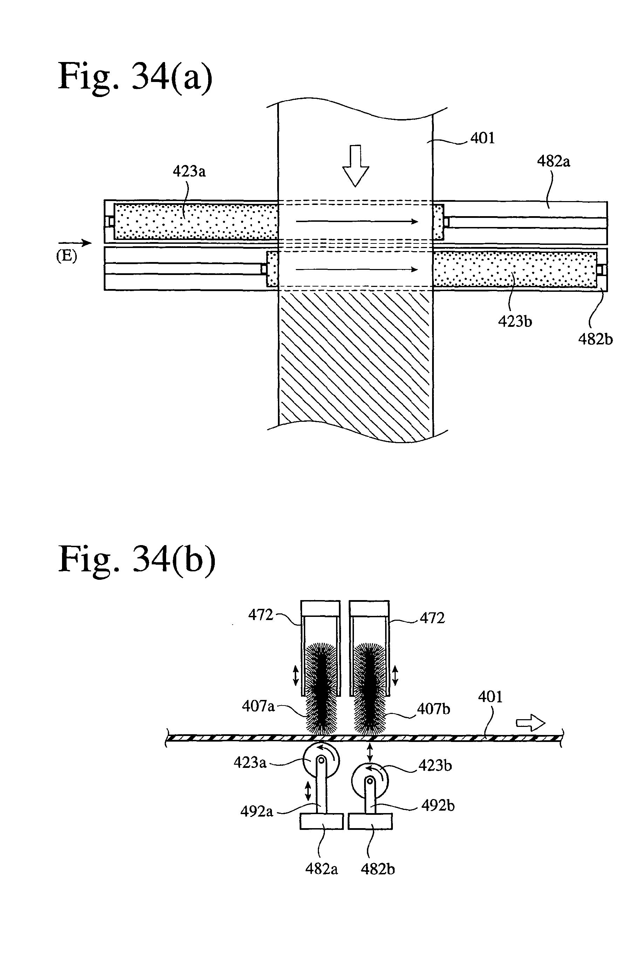

Figs. 34(a) and 34(b) show another example of an apparatus for forming linear scratches slanting relative to the progressing direction of the film 401. In this embodiment, two pattern rolls 423a and 423b each having a larger longitudinal length than the width of the film 401 are disposed in parallel in two rows in the progressing direction of the film 401. The longitudinal length of the pattern rolls 423a and 423b is preferably 2 times the width of the film 401 or more.

Support shafts 492a and 492b supporting the pattern rolls 423a and 423b are movable up and down, and the pattern rolls 423a and 423b are movable straight along guide rails 482a and 482b in the width direction of the film 401. The pattern rolls 423a and 423b can move independently in the width direction of the film 401 by a guide means comprising the 492a and 492b movable up and down and the guide rails 482a and 482b. Accordingly, the pattern rolls 423a and 423b are moved from one end of the film 401 to the other end thereof in sliding contact with the film 401, and then separate from the film 401 and return to the original position, and this cycle is repeated. During the cycle, the movement of the pattern rolls 423a and 423b can be controlled such that any of the pattern rolls are always in sliding contact with the entire width of the film 401, thereby forming linear scratches slanting to the progressing direction of the film. The angle of the slanting linear scratches to the progressing direction of the film can be changed by properly adjusting the sliding speed of the pattern rolls 423a and 423b and the moving speed of the film 401.

The apparatus shown in Fig. 34 comprises, as film-pressing means, endless brushes 407a and 407b movable up and down and opposing the pattern rolls 423a and 423b in parallel via the film 401 as in the apparatus shown in Fig. 32.

Though the apparatuses shown in Figs. 30 to 34 comprise the endless brushes as film-pressing means, they may comprise the air-blowing means described in (1) above.

### (3) Formation of linear scratches on film in width direction

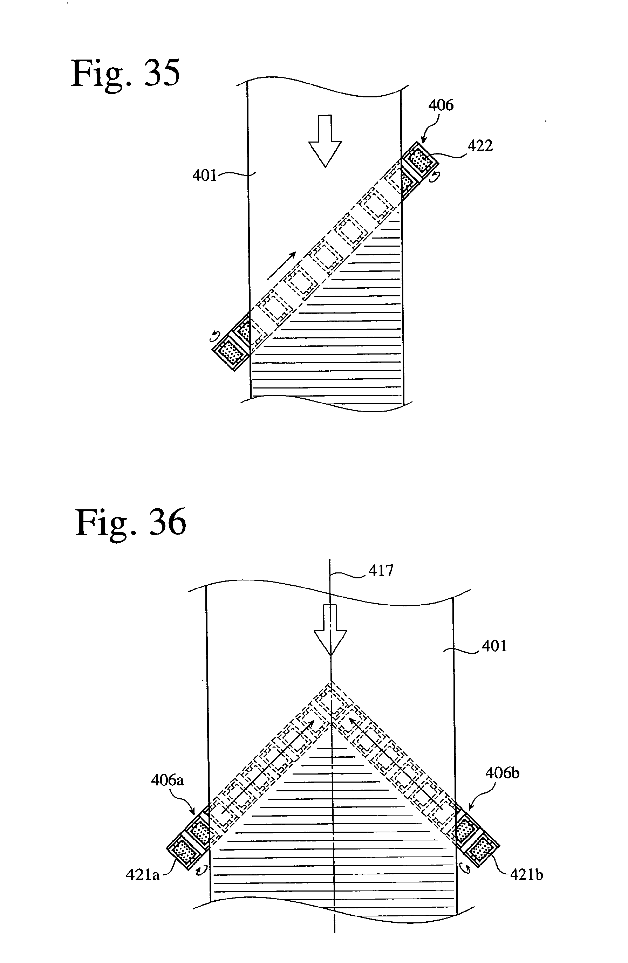

Fig. 35 shows one example of an apparatus for forming linear scratches on the film 401 in a width direction thereof. The same reference numerals are assigned to the same members or portions as in Fig. 30. The apparatus shown in Fig. 35 is the same as those shown in Figs. 30 and 31 except that an endless pattern belt 406 is disposed slantingly to the progressing direction of a film (no endless brush shown). Using an apparatus having the structure shown in Fig. 35, linear scratches can be formed on the film 401 in the width direction thereof, properly adjusting operation conditions such as the progressing speed of the film 401, the angle of the endless pattern belt 406 to progressing direction of the film 401, the peripheral speed of the pattern belt 406, etc.

Fig. 36 shows another example of an apparatus for forming linear scratches on the film 401 in a width direction. In this embodiment, an endless pattern belt 406a comprising a lot of small pattern rolls 421a and an endless pattern belt 406b comprising a lot of small pattern rolls 421b connected to each other are disposed symmetrically relative to the center line 417 of the film 401 as a symmetry axis and slantingly to the progressing direction of the film. The same endless brushes (not shown) as in the apparatus shown in Fig. 30 are preferably disposed as film-pressing means in parallel with endless pattern belts 406a and 406b via a film 401.

Using the apparatus having the structure shown in Fig. 36, linear scratches can be formed on the film 401 in the width direction thereof, by properly adjusting operation conditions such as the progressing speed of the film 401, the angle of the endless pattern belts 406a and 406b to the center line 417 of the film 401, the peripheral speed of the endless pattern belts 406a and 406b, etc.

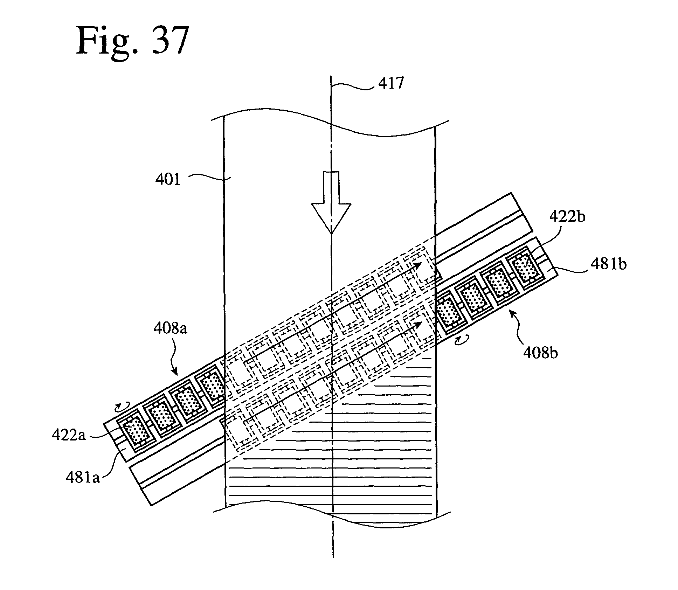

Fig. 37 shows another example of an apparatus for forming linear scratches on the film 401 in a width direction thereof. The apparatus shown in Fig. 37 is the same as the apparatus shown in Fig. 33, except that the same roll trains 408a and 408b as shown in Fig. 33 are disposed slantingly to the width direction of the film 401 (no endless brushes shown). Using the apparatus having the structure shown in Fig. 37, linear scratches can be formed on the film 401 in the width direction thereof, by properly adjusting operation conditions such as the progressing speed of the film 401, the angle of the roll trains 408a and 408b relative to the progressing direction of the film 401, the sliding speed of the roll trains 408a and 408b, etc.

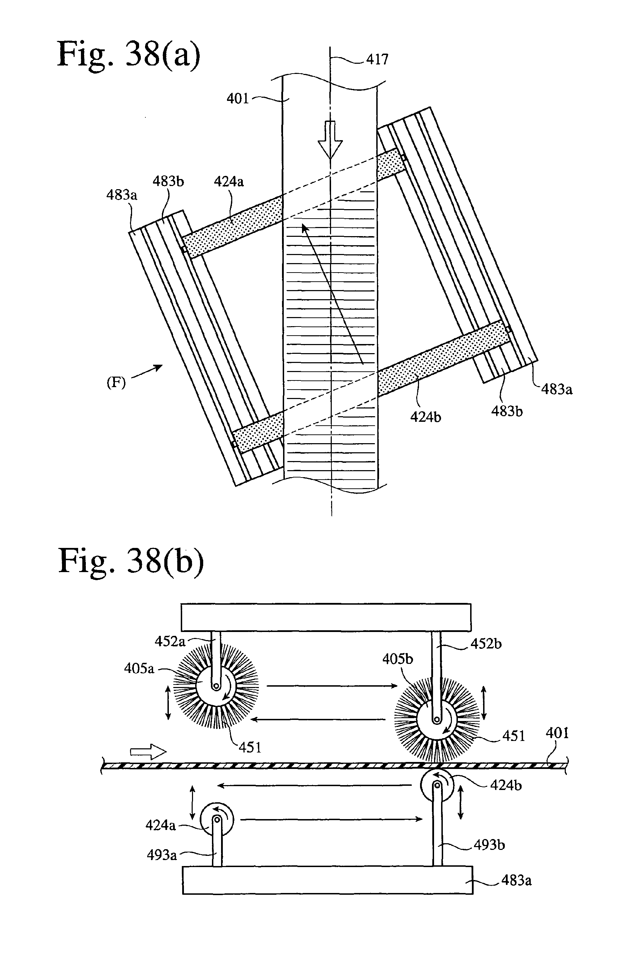

Figs. 38(a) and 38(b) show another example of an apparatus for forming linear scratches on the film 401 in a width direction. Fig. 38(b) shows a left side surface of the apparatus shown in Fig. 38(a) (taken from the direction F in Fig. 38(a)). The apparatus of this embodiment comprises two pattern rolls 424a and 424b each having a longitudinal axis slanting to the progressing direction of the film 401. The longitudinal length of each pattern roll 424a and 424b is preferably at least 2 times the width of the film 401 or more.

Support shafts 493a and 493b supporting the pattern rolls 424a and 424b are movable up and down, and the pattern rolls 424a and 424b are movable straight along guide rails 483a and 483b at a predetermined angle relative to the center line 417 of the film 401. The pattern rolls 424a and 424b can move independently at a predetermined angle relative to the center line 417 of the film 401, by a guide means comprising 493a and 493b movable up and down and the guide rails 483a and 483b. Because the pattern roll 424b is longer than the pattern roll 424a in a longitudinal direction, the pattern rolls 424a and 424b can cross each other during moving in opposite directions. The pattern rolls 424a and 424b thus move from one end of the film 401 to the other end thereof in sliding contact with the film 401, and separate from the film 401 and return to the original position, and this cycle is repeated. Linear scratches can be formed on the film in a width direction thereof, by controlling the movement of the pattern rolls 424a and 424b such that any of the pattern rolls is always in sliding contact with the entire width of the film 401.

As shown in Fig. 38(b), rotatable roll brushes 405a and 405b are supported as film-pressing means by the support shafts 452a and 452b, which are movable up and down and linearly, and move as the pattern rolls 483a and 483b move along the sliding surface of the film 401. One of the rotatable roll brushes 405a and 405b is longer than the other in a longitudinal directions, so that they can cross each other during moving in opposite directions. A contact force is thus always applied to the film 401 in sliding contact with the pattern roll 483a or 483b. The preferred requirements of the hairs 451 of the rotatable roll brushes 405a and 405b concerning a bending recovery ratio, a diameter, a length, a density on the brush-sliding surface, a tip shape and a material may be the same such as those of the rotatable roll brush 405 described in (1) above.

In the apparatuses shown in Figs. 35 to 38, linear scratches can be formed on the film 401 slantingly to a progressing direction thereof, by properly adjusting operation conditions, etc. Though the apparatuses shown in Figs. 35 to 38 comprise the endless brushes as film-pressing means, they may comprise the air-blowing means described in (1) above.

In the easy-to-straight-tear film produced by the above-described method, the above linear scratches are preferably as deep as 1 to 40% of the film thickness, to meet both requirements of high film strength and good easy-to-straight-tear characteristics. The linear scratches are preferably as deep as 0.1 to 10 µm and as wide as 0.1 to 10 µm, and the intervals of the linear scratches are preferably 10 to 200 µm.

### [8] Formation of fine pores on film

To provide the shape-memory PBT laminate film with easy-to-straight-tear characteristics, at least one of the PBT film, the rigid film and the sealant film may be entirely provided with fine penetrating pores. The fine penetrating pores are particularly preferably formed in the sealant film. The fine pores have an average opening diameter of 0.5 to 100 µm, and a distribution density of about 500/cm² or more. When the distribution density of the fine pores is less than about 500/cm², easy tearing is insufficient. Incidentally, the upper limit of the density of the fine pores is not particularly restricted as long as technically possible.

To form the fine pores on the film, the methods disclosed in Japanese patent 2,071,842 and JP 2002-059487 A, for instance, may be used. Using the method disclosed in Japanese patent 2,071,842, for instance, a film is caused to pass between a first roll having a lot of particles with sharp edges and a Mohs' hardness of 5 or more on the surface (the same as the pattern roll 402 described in [7] above), and a second roll having a smooth surface, with pressure applied to the film passing between the rolls adjusted uniform over the entire surface of the film in contact with the roll, to form a lot of fine pores described above on the film with sharp edges of a lot of particles on the first roll surface. The second roll may be, for instance, an iron roll, an iron roll plated with Ni, Cr, etc., a stainless steel roll, a specialty steel roll, etc.

### [9] Vapor deposition of ceramics or metals

To improve the gas barrier of the shape-memory PBT laminate film, the PBT film may be vapor-deposited with metals, ceramics, etc., or coated with resins. Specific examples of the ceramics for vapor deposition include silica, alumina, etc. The vapor deposition of metals, ceramics, etc. may be carried out by known methods.

### [10] Functional polybutylene terephthalate film

### (1) Easy-to-straight-tear polybutylene terephthalate film

The easy-to-straight-tear PBT film of the present invention has a lot of substantially parallel linear scratches formed on at least one surface thereof by the method described in the above [7]. It can be easily torn straight from any point along the linear scratches, because of the characteristics of easily tearing straight in one direction regardless of the orientation of the original film. A wrapping bag formed from the easy-to-straight-tear PBT film of the present invention can be opened in a strip shape without tapering while keeping a constant width. In addition, the easy-to-straight-tear PBT film of the present invention has excellent gas barrier, because the linear scratches do not penetrate the film.

Though not particularly restrictive, the PBT film used for the production of the easy-to-straight-tear PBT film is preferably obtained by the method described in [6] above. Because the PBT film obtained by the method described in [6] above has a small thermal shrinkage ratio, a stable vapor deposition layer can be formed thereon.

The depth of the linear scratches of the easy-to-straight-tear PBT film is preferably 1 to 40% of the film thickness, to meet both requirements of high film strength and good easy-to-straight-tear characteristics. The linear scratches are preferably as deep as 0.1 to 10 µm and as wide as 0.1 to 10 µm, and the intervals of the linear scratches are preferably 10 to 200 µm.

The thickness of the easy-to-straight-tear PBT film is preferably about 5 to 50 µm, more preferably about 10 to 20 µm, for instance, about 12 µm. With the thickness of about 5 to 50 µm, sufficient odor retention and gas barrier as well as good gloss and printability are obtained.

The easy-to-straight-tear PBT film may be vapor-deposited with metals, ceramics, etc., or coated with resins. Specific examples of the ceramics for vapor deposition include silica, alumina, etc. The vapor deposition of such ceramics provides the easy-to-straight-tear PBT film with improved gas barrier. The vapor deposition of metals, ceramics, etc. may be carried out by known methods. The metals, ceramics, etc. may be vapor-deposited on the film with or without linear scratches.

The easy-to-straight-tear PBT film may be a laminate film having a layer of common polyolefins and special polyolefms. Specifically, they are low-density polyethylene (LDPE), medium-density polyethylene (MDPE), high-density polyethylene (HDPE), cast polypropylene (CPP), linear-low-density polyethylene (LLDPE), very-low-density polyethylene (VLDPE), ethylene-vinyl acetate copolymers (EVA), ethylene-acrylic acid copolymers (EAA), ethylene methacrylic acid copolymers (EMAA), ethylene ethyl acrylate copolymers (EEA), ethylene-methylmethacrylate copolymers (EMMA), ethylene-methyl acrylate copolymers (EMA), ionomers (IO), etc. To further improve moisture resistance and gas barrier, the laminate film preferably comprises an intermediate layer formed by an aluminum foil, a silica-deposited polyethylene terephthalate film, an alumina-deposited polyethylene terephthalate film, etc.

In the production of the laminate film, the PBT film may be formed with linear scratches and then laminated with another film or film laminate layer with or without the above intermediate layer, as described below. The lamination is carried out by extrusion with an adhesive layer between the layers. The adhesive layer is preferably made of polyethylene.

The easy-to-straight-tear PBT film having linear scratches formed in a progressing direction thereof (longitudinal direction) may be used for wrapping bags for stick cookies. The wrapping bags formed by the easy-to-straight-tear PBT film of the present invention having linear scratches in a longitudinal direction can be opened in a strip shape without tapering while keeping a constant width, the cookies are not damaged. Though wrappings formed by OPP films for rice balls, etc. are provided with cutting tapes (tear tapes) in alignment with the opening width, the easy-to-straight-tear PBT film of the present invention having linear scratches in a longitudinal direction does not need a tear tape, because it can be opened while keeping the opening width.

The easy-to-straight-tear PBT film having linear scratches slanting to a progressing direction thereof may be used for wrapping bags of powdery medicine, seasonings for lunch boxes, etc. A wrapping bag formed by the easy-to-straight-tear PBT film of the present invention having slanting linear scratches can be easily torn slantingly in a corner thereof.

The easy-to-straight-tear PBT film having linear scratches in a width direction (transverse direction) may be used for stick-shaped wrapping bags of powdery instant food, etc. Using the easy-to-straight-tear PBT film of the present invention having linear scratches in a transverse direction, stick-shaped wrapping bags having increasing demand can be produced at a low cost.

The easy-to-straight-tear PBT film can be uniformly formed with a lot of fine penetrating pores and/or a lot of fine non-penetrating pores by the method described in [8] above, to further improve its easy-to-straight-tear characteristics, and to impart easy tearing characteristics in other directions than the direction of the linear scratches.

### (2) Porous polybutylene terephthalate film

The porous PBT film of the present invention has a lot of fine penetrating pores and/or a lot of fine non-penetrating pores uniformly formed by the method described in [8] above. Accordingly, the porous PBT film of the present invention has good twistability and twist retention, without suffering from tearing when twisted. The fine pores preferably have an average opening diameter of 0.5 to 100 µm and a density of about 500/cm² or more. When the density of the fine pores is less than about 500/cm², the twist retention is insufficient.

Though not particularly restrictive, the PBT film used for the production of the porous PBT film is preferably obtained by the method described in [6] above.

The porous PBT films of the present invention are useful as package sheets provided with good tearability and twist retention as well as practical properties without losing heat resistance, odor retention, water resistance, etc., excellent properties of the PBT film. When gas barrier is required for package sheets formed by the porous PBT film of the present invention, those having non-penetrating fine pores should be used.

Though the present invention has been explained above referring to the drawings, the present invention is not restricted thereto, and various modifications may be added to the present invention unless changing the spirit thereof.

The present invention will be explained in more detail referring to Examples below without intention of restricting the present invention thereto.

### Example 1

Using two types of PBT resins ("Toraycon 1209X01" and "Toraycon 1200S" (tradenames) both commercially available from Toray Industries, Inc.), a tubular film was extruded from a die having a die lip of 150 mm in outer diameter at a resin extrusion temperature of 230°C, a resin-extruding pressure of 11.8 MPa (120 kgf/cm²) and a blow-up ratio of 1.5 to 2.5, and taken up to obtain a film while cooling by first to third cooling rings and a humid air ejected from a cooling-air-ejecting means. The properties of the resultant film were measured by the following methods. The results are shown in Table 1.
- Average thickness:: Measured by a dial gauge.
- Average bulk density:: The weight of a rectangular test piece of 10 cm x 10 cm was measured by a precise weighing machine.
- Tensile rupture strength:: The tensile rupture strength of a 10-mm-wide rectangular test piece was measured according to ASTM D882.
- Tensile rupture elongation:: The tensile rupture elongation of a 10-mm-wide rectangular test piece was measured according to ASTM D882.
- Thermal shrinkage ratio:: The shrinkage ratio of a film was measured in both machine direction (MD) and transverse direction (TD) when exposed to 100°C, 130°C, 160°C, 175°C and 200°C, respectively, for 10 minutes.

**Table 1**

| Production Conditions | | 1 | 2 | 3 | 4 |
|---|---|---|---|---|---|
| PBT Resin⁽¹⁾ (Grade) | | 1209X-01 | 1209X-01 | 1209X-01 | 1200S |
| Blow-up Ratio | | 2.5 | 1.5 | 2.1 | 2.1 |
| Resin Extrusion Temperature (°C) | | 230 | 230 | 230 | 230 |
| Resin-Extruding Pressure (kg/cm²) | | 120 | 120 | 120 | 120 |

| Properties | | | | | |
|---|---|---|---|---|---|
| Average Thickness (µm) | | 19.8 | 18.0 | 19.5 | 18.8 |
| Average Bulk Density (g/m²) | | 19.6 | 21.5 | 19.8 | 20.7 |
| Tensile Rupture | MD | 1687 | 1568 | 1545 | 1828 |
| Strength (gf/25mm) | TD | 1540 | 1191 | 1377 | 1471 |
| Tensile Rupture | MD | - | - | - | 4 |
| Elongation (%) | TD | - | - | - | - |

| Thermal Shrinkage Ratio (%) | | | | | |
|---|---|---|---|---|---|
| at 100°C for 10 min. | MD | 0.17 | 0.1 | 0.17 | 0.17 |
| | TD | 0 | 0 | 0 | 0 |
| at 130°C for 10 min. | MD | 0.1 | 0 | 0.2 | 0.25 |
| | TD | 0 | 0 | 0 | 0 |
| at 160°C for 10 min. | MD | 0.1 | 0.1 | 0.1 | 0.1 |
| | TD | 0 | 0 | 0 | 0 |
| at 175°C for 10 min. | MD | 0 | 0 | 0.1 | 0.1 |
| | TD | 0 | 0 | 0 | 0 |
| at 200°C for 10 min. | MD | - | - | 0 | 0 |
| | TD | - | - | 0 | 0.1 |

| | | | | | |
|---|---|---|---|---|---|
| Note: (1) "Toraycon" (trade name) commercially available from Toray Industries, Inc. | | | | | |

As shown in Table 1, the PBT films produced by the method of the present invention have a thermal shrinkage ratio of substantially zero even when heated to 200°C, indicating excellent thermal shrinkage resistance.

## Claims

1. A shape-memory polybutylene terephthalate laminate film comprising a polybutylene terephthalate film, and at least one selected from the group consisting of a paper sheet, another resin film and a metal foil or a laminate comprising it, which has a first shape memorized in a predetermined temperature range.

2. The shape-memory polybutylene terephthalate laminate film according to claim 1, which is deformed to a second shape in a different temperature range from said predetermined temperature range.

3. The shape-memory polybutylene terephthalate laminate film according to claim 2, which substantially recovers said first shape from said second shape when exposed to a temperature at which said first shape is memorized.

4. The shape-memory polybutylene terephthalate laminate film according to claim 3, wherein the temperature at which said first shape is recovered is the glass transition temperature of said polybutylene terephthalate or lower.

5. The shape-memory polybutylene terephthalate laminate film according to claim 4, wherein the temperature at which said first shape is recovered is 35°C or lower.

6. The shape-memory polybutylene terephthalate laminate film according to claim 3, wherein the temperature at which said first shape is recovered is higher than the glass transition temperature and lower than the melting point of said polybutylene terephthalate.

7. The shape-memory polybutylene terephthalate laminate film according to claim 6, wherein the temperature at which said first shape is recovered is 75 to 100°C.

8. The shape-memory polybutylene terephthalate laminate film according to any one of claims 2 to 7, wherein said first shape is a curled shape, and said second shape is substantially a flat shape or an oppositely curled shape.

9. The shape-memory polybutylene terephthalate laminate film according to any one of claims 1 to 8, which has at least one entire surface provided with a lot of substantially parallel linear scratches, whereby it can be torn substantially straight along said linear scratches from any point.

10. The shape-memory polybutylene terephthalate laminate film according to claim 9, wherein the depth of said linear scratches is 1 to 40% of the thickness of said polybutylene terephthalate film.

11. The shape-memory polybutylene terephthalate laminate film according to claim 9 or 10, wherein the depth of said linear scratches is 0.1 to 10 µm, and the width of said linear scratches is 0.1 to 10 µm; and wherein the intervals of said linear scratches are 10 to 200 µm.

12. The shape-memory polybutylene terephthalate laminate film according to any one of claims 9 to 11, which has at least one surface vapor-deposited with a ceramic or a metal.

13. The shape-memory polybutylene terephthalate laminate film according to any one of claims 1 to 12, which has a layer structure comprising said polybutylene terephthalate film, said paper sheet and a sealant film in this order.

14. The shape-memory polybutylene terephthalate laminate film according to any one of claims 1 to 12, which has a layer structure comprising said polybutylene terephthalate film, said paper sheet, a rigid film and a sealant film in this order.

15. The shape-memory polybutylene terephthalate laminate film according to any one of claims 1 to 12, which has a layer structure comprising said polybutylene terephthalate film, a rigid film and a sealant film in this order.

16. The shape-memory polybutylene terephthalate laminate film according to any one of claims 13 to 15, which has a light-screening ink layer on a surface of said polybutylene terephthalate film on the side of said paper sheet, or on a surface of said rigid film on the side of said sealant film.

17. A package sheet constituted by the shape-memory polybutylene terephthalate laminate film recited in any one of claims 1 to 16.

18. A container lid constituted by the shape-memory polybutylene terephthalate laminate film recited in any one of claims 1 to 16.

19. A method for producing a shape-memory polybutylene terephthalate laminate film comprising (a) a polybutylene terephthalate film, and (b) at least one selected from the group consisting of a paper sheet, another resin film and a metal foil, or a laminate comprising it, said method comprising the steps of (1) subjecting a laminate film comprising said polybutylene terephthalate film and another film or film laminate to a shaping treatment at a temperature T₁ equal to or lower than the glass transition temperature of said polybutylene terephthalate while maintaining a first shape; (2) deforming the shaped laminate film to a second shape at a temperature T₂ higher than said glass transition temperature; and (3) cooling said laminate film to a temperature T₃ equal to or lower than said glass transition temperature so that said laminate film is fixed to said second shape.

20. The method for producing a shape-memory polybutylene terephthalate laminate film according to claim 19, wherein said first shape is a curled shape, and said second shape is substantially a flat shape or an oppositely curled shape.

21. The method for producing a shape-memory polybutylene terephthalate laminate film according to claim 20, wherein a laminate film comprising said polybutylene terephthalate film adhered to another film or film laminate is conveyed by a roll, such that said laminate film is worked along a peripheral surface of said roll at said temperature T₁ to have a curled shape.

22. The method for producing a shape-memory polybutylene terephthalate laminate film according to any one of claims 19 to 21, wherein said laminate film is deformed at said temperature T₂ for 30 to 60 seconds.

23. The method for producing a shape-memory polybutylene terephthalate laminate film according to any one of claims 19 to 22, wherein said temperature T₁ is 35°C or lower, said temperature T₂ is higher than 45°C and 65°C or lower, and said temperature T₃ is 15 to 25°C.

24. The method for producing a shape-memory polybutylene terephthalate laminate film according to any one of claims 19 to 23, wherein said temperature T₁ is 15 to 25°C.

25. The method for producing a shape-memory polybutylene terephthalate laminate film according to any one of claims 20 to 24, wherein the curled laminate film is cooled to said temperature T₃, and then wound in an uncurling direction.

26. The method for producing a shape-memory polybutylene terephthalate laminate film according to any one of claims 19 to 25, wherein a tension of 4 kgf/m (width) or more is applied to said polybutylene terephthalate film when said polybutylene terephthalate film is adhered to another film or film laminate.

27. The method for producing a shape-memory polybutylene terephthalate laminate film according to claim 26, wherein said tension is 10 to 20 kgf/m (width).

28. A method for producing a shape-memory polybutylene terephthalate laminate film comprising (a) polybutylene terephthalate film, and (b) at least one selected from the group consisting of a paper sheet, another resin film and a metal foil, or a laminate comprising it, said method comprising the steps of (1) (i) laminating said polybutylene terephthalate film with another film or film laminate, after a shaping treatment at a temperature T₄ higher than the glass transition temperature and lower than the melting point of said polybutylene terephthalate while maintaining said polybutylene terephthalate film in a first shape, or (ii) producing a laminate film of said polybutylene terephthalate film and another film or film laminate in advance, and subjecting it to a shaping treatment at said temperature T₄ while maintaining it in the first shape to produce the shaped laminate film having said first shape; (2) cooling the shaped laminate film to a temperature T₅ equal to or lower than said glass transition temperature to fix it to said first shape; (3) deforming said shaped laminate film to a second shape at a temperature T₆ higher than said glass transition temperature and lower than said temperature T₄; and then (4) cooling the deformed laminate film to a temperature T₇ equal to or lower than said glass transition temperature to fix it to said second shape.

29. The method for producing a shape-memory polybutylene terephthalate laminate film according to claim 28, wherein said first shape is a curled shape, and said second shape is substantially a flat shape or an oppositely curled shape.

30. The method for producing a shape-memory polybutylene terephthalate laminate film according to claim 28 or 29, wherein said temperature T₄ is 75 to 100°C; said temperature T₅ is 40°C or lower; said temperature T₆ is 45 to 65°C; and said temperature T₇ is 40°C or lower.

31. The method for producing a shape-memory polybutylene terephthalate laminate film according to claim 29 or 30, comprising conveying said polybutylene terephthalate film in contact with a peripheral surface of one of a pair of heat rolls, heating it at said temperature T₄ along the peripheral surface of said heat roll to provide said polybutylene terephthalate film with a curled shape, and then continuously adhering the curled polybutylene terephthalate film to another film or film laminate by causing them to pass through a pair of said heat rolls, thereby providing a curled laminate film.

32. The method for producing a shape-memory polybutylene terephthalate laminate film according to claim 29 or 30, wherein said polybutylene terephthalate laminate film is conveyed by a heat roll to treat it at said temperature T₄ along the peripheral surface of said heat roll.

33. The method for producing a shape-memory polybutylene terephthalate laminate film according to any one of claims 28 to 32, wherein a tension of 4 kgf/m (width) or more is applied to said polybutylene terephthalate film at the time of adhering said polybutylene terephthalate film to another film or film laminate.

34. The method for producing a shape-memory polybutylene terephthalate laminate film according to claim 33, wherein said tension is 10 to 20 kgf/m (width).

35. The method for producing a shape-memory polybutylene terephthalate laminate film according to any one of claims 29 to 34, wherein the curled laminate film is cooled to said temperature T₅, wound in an uncurling direction, and then treated at said temperature T₆ or lower and said temperature T₇.

36. A method for producing a container having a lid heat-sealed to a container body, said lid being composed of the shape-memory polybutylene terephthalate laminate film recited in any one of claims 1 to 16, comprising the steps of annealing said shape-memory polybutylene terephthalate laminate film at a temperature T₈ higher than the glass transition temperature of said polybutylene terephthalate while keeping it flat; and punching and heat-sealing the resultant substantially flat shape-memory polybutylene terephthalate laminate film to said container body by a lid-sealing means, thereby adhering said lid composed of said shape-memory polybutylene terephthalate laminate film to said container.

37. The method for producing a container having a lid composed of a shape-memory polybutylene terephthalate laminate film according to claim 36, wherein said annealing is conducted for 30 to 60 seconds.

38. The method for producing a container having a lid composed of a shape-memory polybutylene terephthalate laminate film according to claim 36 or 37, wherein said temperature T₈ is 80 to 120°C.

39. A method for producing a polybutylene terephthalate film from a polybutylene terephthalate resin by an air-cooled inflation method, comprising the steps of ejecting a humid air through a first cooling ring disposed near an annular die to cool a neck portion of a bubble at a blow-up ratio of 1.5 to 2.8, a resin extrusion temperature of 210 to 250°C, and a resin-extruding pressure of 9.8 to 13.7 MPa.

40. The method for producing a polybutylene terephthalate film according to claim 39, wherein said bubble is further cooled by a cooling air ejecting from the second cooling ring disposed slightly above a frost line of said bubble; and wherein the temperature around a cylindrical net disposed between said first cooling ring and said second cooling ring is kept constant, thereby stabilizing the temperature of said bubble cooled by said first cooling ring and said second cooling ring.

41. The method for producing a polybutylene terephthalate film according to claim 39 or 40, wherein a humid air ejected from a cooling-air-ejecting means disposed in a lower portion of said net is blown up along an outer surface of said cylindrical net, to cool the surrounding of said net.

42. The method for producing a polybutylene terephthalate film according to any one of claims 39 to 41, wherein said bubble is further cooled by a third cooling ring disposed slightly above said second cooling ring.

43. The method for producing a polybutylene terephthalate film according to any one of claims 39 to 42, wherein the cooling air ejected from said second cooling ring and said third cooling ring is a humid air.

44. The method for producing a polybutylene terephthalate film according to any one of claims 39 to 43, wherein the temperature of said humid air is 15 to 25°C.

45. An easy-to-straight-tear polybutylene terephthalate film comprising a polybutylene terephthalate film having a lot of substantially parallel linear scratches at least one entire surface, so that it can be torn substantially straight along said linear scratches from any point.

46. The easy-to-straight-tear polybutylene terephthalate film according to claim 45, wherein the depth of said linear scratches is 1 to 40% of the film thickness.

47. The easy-to-straight-tear polybutylene terephthalate film according to claim 45 or 46, wherein the depth of said linear scratches is 0.1 to 10 µm.

48. The easy-to-straight-tear polybutylene terephthalate film according to any one of claims 45 to 47, wherein the width of said linear scratches is 0.1 to 10 µm.

49. The easy-to-straight-tear polybutylene terephthalate film according to any one of claims 45 to 48, wherein the intervals of said linear scratches are 10 to 200 µm.

50. The easy-to-straight-tear polybutylene terephthalate film according to any one of claims 45 to 49, wherein a lot of fine penetrating pores and/or non-penetrating pores are uniformly formed.

51. The easy-to-straight-tear polybutylene terephthalate film according to any one of claims 45 to 50, wherein said easy-to-straight-tear polybutylene terephthalate film is a single-layer film or a laminate film.

52. The easy-to-straight-tear polybutylene terephthalate film according to claim 51, wherein said laminate film comprises at least one layer composed of a film having said linear scratches, and a sealant film layer.

53. The easy-to-straight-tear polybutylene terephthalate film according to any one of claims 45 to 52, wherein a ceramic or a metal is vapor-deposited thereon.

54. A package sheet composed of the easy-to-straight-tear polybutylene terephthalate film recited in any one of claims 45 to 53.

55. A porous polybutylene terephthalate film comprising a polybutylene terephthalate film having a lot of fine penetrating pores and/or non-penetrating pores formed uniformly, thereby having good twist retention.

56. The porous polybutylene terephthalate film according to claim 55, wherein said fine pores having an average opening diameter of 0.5 to 100 µm at a density of 500/cm² or more.

57. A package sheet composed of the porous polybutylene terephthalate film recited in claim 55 or 56.
